(19) 
**Europäisches Patentamt**
**European Patent Office**
**Office européen des brevets**

(11) **EP 4 776 728 A1**

(12) **EUROPEAN PATENT APPLICATION**
published in accordance with Art. 153(4) EPC

(43) Date of publication:
**15.07.2026 Bulletin 2026/29**

(21) Application number: **24870583.2**

(22) Date of filing: **19.09.2024**

(51) International Patent Classification (IPC):
*H04W 72/23* (2023.01)

(52) Cooperative Patent Classification (CPC):
**H04W 72/0446; H04W 72/0453; H04W 72/23;
H04W 72/542**

(86) International application number:
**PCT/CN2024/119869**

(87) International publication number:
**WO 2025/067039 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311270988**

(71) Applicant: **HUAWEI TECHNOLOGIES CO., LTD.
Shenzhen 518129 (CN)**

(72) Inventors:
• **WANG, Zhonglong**
  **Shenzhen, Guangdong 518129 (CN)**
• **XIE, Xinqian**
  **Shenzhen, Guangdong 518129 (CN)**
• **SHAO, Jiafeng**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS, AND COMPUTER-READABLE STORAGE MEDIUM**

(57) This application provides a communication method and apparatus, and a computer-readable storage medium. The communication method includes: receiving first information, where the first information indicates at least one of a first resource, a quantity of resource repetitions associated with the first resource, and whether the first resource is used for sensing, the first resource includes inconsecutive time-domain symbols in time domain, the first resource includes comb resource elements in frequency domain, frequency domain offsets of resource elements included on different time-domain symbols of the first resource are different, and the first resource is used to transmit a first signal; and sending the first signal on the first resource. The technical solutions provided in this application can reduce overheads for sending a signal.

FIG. 4

EP 4 776 728 A1

**Description**

This application claims priority to Chinese Patent Application No. 202311270988.9, filed with the China National Intellectual Property Administration on September 27, 2023 and entitled "COMMUNICATION METHOD AND APPARATUS, AND COMPUTER-READABLE STORAGE MEDIUM", which is incorporated herein by reference in its entirety.

**TECHNICAL FIELD**

This application relates to the field of wireless communication technologies, and in particular, to a communication method and apparatus, and a computer-readable storage medium.

**BACKGROUND**

Integrated sensing and communication can integrate wireless communication and sensing into a same system, and implement sensing functions such as positioning, detection, imaging, and recognition of a target by using a propagation characteristic of a wireless signal, to obtain information about a surrounding physical environment. For example, a terminal device may send a sensing signal, and a network device receives an echo signal of the sensing signal. The echo signal is a signal generated after the sensing signal is reflected by the target in the environment. The network device receives the echo signal, and estimates parameters such as a position and a speed of the target in the environment, to obtain related information of the target in the environment.

However, resource overheads for sending, by the terminal device, an SRS signal used for sensing are excessively high, resulting in a waste problem. Therefore, how to reduce the overheads for sending, by the terminal device, the SRS signal used for sensing is an urgent problem to be resolved.

**SUMMARY**

Embodiments of this application provide a communication method and apparatus, and a computer-readable storage medium, to reduce overheads for sending a signal.

According to a first aspect, this application provides a communication method. The method may be applied to a terminal device, or may be applied to an apparatus (for example, a chip, a chip system, or a circuit) in the terminal device, or an apparatus that can be used together with the terminal device. The following provides descriptions by using an example in which the method is applied to the terminal device. The method may include: The terminal device receives first information, where the first information indicates at least one of a first resource, a quantity of resource repetitions associated with the first resource, and whether the first resource is used for sensing, the first resource includes inconsecutive time-domain symbols in time domain, the first resource includes comb resource elements in frequency domain, frequency domain offsets of resource elements included on different time-domain symbols of the first resource are different, and the first resource is used to transmit a first signal; and sends the first signal on the first resource.

In the solutions provided in this application, in comparison with a solution in which a large quantity of consecutive time-domain symbol resources (for example, 12 consecutive time-domain symbol resources) are arranged in time domain, in this solution, the first information indicates at least one of the first resource, the quantity of resource repetitions associated with the first resource, and whether the first resource is used for sensing, because the first resource includes inconsecutive time-domain symbols in time domain, that is, a small quantity of time-domain symbol resources are arranged at intervals in time domain, overheads for sending the first signal can be reduced.

In a possible implementation, the first resource includes two time-domain symbols, and an interval between adjacent time-domain symbols is six symbols or seven symbols; the first resource includes comb-2 resource elements in frequency domain, and offsets of the resource elements that are included on the two time-domain symbols of the first resource and that are relative to a resource element numbered 0 are 0 and 1 respectively; or the first resource includes comb-4 resource elements in frequency domain, and offsets of the resource elements that are included on the two time-domain symbols of the first resource and that are relative to a resource element numbered 0 are 0 and 2 respectively.

In a possible implementation, the first resource includes four time-domain symbols, and an interval between adjacent time-domain symbols is three symbols; the first resource includes comb-2 resource elements in frequency domain, and offsets of the resource elements that are included on the four time-domain symbols of the first resource and that are relative to a resource element numbered 0 are 0, 1, 0, and 1 respectively; or the first resource includes comb-4 resource elements in frequency domain, and offsets of the resource elements that are included on the four time-domain symbols of the first resource and that are relative to a resource element numbered 0 are 0, 2, 1, and 3 respectively; or the first resource includes comb-8 resource elements in frequency domain, and offsets of the resource elements that are included on the four time-domain symbols of the first resource and that are relative to a resource element numbered 0 are 0, 4, 2, and 6 respectively.

In a possible implementation, a value of the quantity of resource repetitions associated with the first resource belongs to a first set, and the first set includes an integer greater than or equal to 12.

In embodiments of this application, the quantity of resource repetitions associated with the first resource is indicated, and the first signal may be repeatedly sent on the first resource, so that the network device can combine the repeatedly sent first signals, to increase a signal-to-noise ratio of the received first signal, thereby improving sensing coverage performance when the first signal is used for sensing. In addition, the first set includes the integer greater than or equal to 12. With reference to a maximum quantity of resource repetitions and the pattern of the resource designed in this embodiment of this application, a quantity of first signals actually sent in this embodiment may be greater than or equal to a quantity of first signals sent on 12 existing consecutive time-domain symbols, thereby ensuring that coverage performance of the pattern of the resource designed in this embodiment of this application is not lower than coverage performance of sending the first signal on the 12 consecutive time-domain symbols.

In a possible implementation, the first set includes 1, 2, 3, 4, 6, and 12.

In a possible implementation, the first information indicates that the first signal is used for sensing, and phase continuity is maintained while sending the first signal.

In the solution provided in this application, if the first information indicates that the first signal transmitted on the first resource is used for sensing, a small quantity of time-domain symbol resources are arranged at intervals in time domain, and phase continuity is maintained while sending the first signal, to avoid a speed measurement failure due to a random phase of a signal sent on a radio frequency link.

In a possible implementation, the first information indicates at least one of the following: a quantity of time-domain symbols of the first resource, a comb size, an interval between time-domain symbols, position information of one time-domain symbol in the time-domain symbols included in the first resource, and frequency domain offset information of resource elements included on different time-domain symbols.

In a possible implementation, there is a correspondence between the quantity of time-domain symbols of the first resource, the comb size, and the frequency domain offset information of the resource elements included on the different time-domain symbols.

In a possible implementation, the first signal is a sounding reference signal or a sounding reference signal for positioning.

In a possible implementation, the first signal is used for sensing, or used for sensing and channel measurement, or used for sensing and channel estimation, or used for sensing and positioning.

According to a second aspect, this application provides a communication method. The method may be applied to a network device, or may be applied to an apparatus (for example, a chip, a chip system, or a circuit) in the network device, or an apparatus that can be used together with the network device. The following provides descriptions by using an example in which the method is applied to the network device. The method may include: sending first information, where the first information indicates at least one of a first resource, a quantity of resource repetitions associated with the first resource, and whether the first resource is used for sensing, the first resource includes inconsecutive time-domain symbols in time domain, the first resource includes comb resource elements in frequency domain, frequency domain offsets of resource elements included on different time-domain symbols of the first resource are different, and the first resource is used to transmit a first signal; and receiving the first signal on the first resource.

In the solutions provided in this application, in comparison with a solution in which a large quantity of consecutive time-domain symbol resources (for example, 12 consecutive time-domain symbol resources) are arranged in time domain, in this solution, the first information indicates at least one of the first resource, the quantity of resource repetitions associated with the first resource, and whether the first resource is used for sensing, because the first resource includes inconsecutive time-domain symbols in time domain, that is, a small quantity of time-domain symbol resources are arranged at intervals in time domain, overheads for sending the first signal can be reduced.

It should be understood that the second aspect may be performed by the network device. Specific content of the second aspect corresponds to the content of the first aspect. For corresponding features of the second aspect and beneficial effect achieved in the second aspect, refer to the descriptions of the first aspect. To avoid repetition, detailed descriptions are appropriately omitted herein.

In a possible implementation, the first resource includes two time-domain symbols, and an interval between adjacent time-domain symbols is six symbols or seven symbols; the first resource includes comb-2 resource elements in frequency domain, and offsets of the resource elements that are included on the two time-domain symbols of the first resource and that are relative to a resource element numbered 0 are 0 and 1 respectively; or the first resource includes comb-4 resource elements in frequency domain, and offsets of the resource elements that are included on the two time-domain symbols of the first resource and that are relative to a resource element numbered 0 are 0 and 2 respectively.

In a possible implementation, the first resource includes four time-domain symbols, and an interval between adjacent time-domain symbols is three symbols; the first resource includes comb-2 resource elements in frequency domain, and offsets of the resource elements that are included on the four time-domain symbols of the first resource and that are relative to a resource element numbered 0 are 0, 1, 0, and 1 respectively; or the first resource includes comb-4 resource elements in frequency domain, and offsets of the resource elements that are included on the four time-domain symbols of the first resource and that are relative to a resource element numbered 0 are 0, 2, 1, and 3 respectively; or the first resource includes comb-8 resource elements in frequency domain, and offsets of the resource elements that are included on the four time-domain symbols of the first resource and that are relative to a resource element numbered 0 are 0, 4, 2, and 6 respectively.

In a possible implementation, a value of the quantity of resource repetitions associated with the first resource belongs to a first set, and the first set includes an integer greater than or equal to 12.

In a possible implementation, the first set includes 1, 2, 3, 4, 6, and 12.

In a possible implementation, the first information indicates that the first signal is used for sensing, and phase continuity is maintained while sending the first signal.

In a possible implementation, the first information indicates at least one of the following: a quantity of time-domain symbols of the first resource, a comb size, an interval between time-domain symbols, position information of one time-domain symbol in the time-domain symbols included in the first resource, and frequency domain offset information of resource elements included on different time-domain symbols.

In a possible implementation, there is a correspondence between the quantity of time-domain symbols of the first resource, the comb size, and the frequency domain offset information of the resource elements included on the different time-domain symbols.

In a possible implementation, the first signal is a sounding reference signal or a sounding reference signal for positioning.

In a possible implementation, the first signal is used for sensing, or used for sensing and channel measurement, or used for sensing and channel estimation, or used for sensing and positioning.

In a possible implementation, the method may further include: performing sensing, or sensing and channel measurement, or sensing and channel estimation, or sensing and positioning based on the first signal.

According to a third aspect, an embodiment of this application provides a communication apparatus. The communication apparatus may be used in a terminal device, a module (for example, a chip or a processor) in the terminal device, or a logical module or software that can implement all or some functions of the terminal device. The communication apparatus has a function of implementing behavior in the method example according to any one of the first aspect or the possible implementations of the first aspect. The function may be implemented by hardware, or may be implemented by hardware executing corresponding software. The hardware or the software includes one or more modules corresponding to the function. For beneficial effect, refer to descriptions of the first aspect. Details are not described herein again.

According to a fourth aspect, an embodiment of this application provides a communication apparatus. The communication apparatus may be used in a network device, a module (for example, a chip or a processor) in the network device, or a logical module or software that can implement all or some functions of the network device. The communication apparatus has a function of implementing behavior in the method example according to any one of the second aspect or the possible implementations of the second aspect. The function may be implemented by hardware, or may be implemented by hardware executing corresponding software. The hardware or the software includes one or more modules corresponding to the function. For beneficial effect, refer to descriptions of the second aspect. Details are not described herein again.

According to a fifth aspect, a communication apparatus is provided. The communication apparatus may be the terminal device in the foregoing method embodiments, or may be an apparatus (for example, a chip, a chip system, or a circuit) in the terminal device. The communication apparatus may include a processor. Optionally, the communication apparatus may include a memory, an input interface, and an output interface. The input interface is configured to receive information from a communication apparatus other than the communication apparatus. The output interface is configured to output the information to the communication apparatus other than the communication apparatus. The processor is coupled to the memory. The memory is configured to store a program or instructions. When the program or the instructions is/are executed by the processor, the communication apparatus is enabled to perform the method according to any one of the first aspect or the possible implementations of the first aspect.

According to a sixth aspect, a communication apparatus is provided. The communication apparatus may be the network device in the foregoing method embodiments, or may be an apparatus (for example, a chip, a chip system, or a circuit) in the network device. The communication apparatus may include a processor. Optionally, the communication apparatus may include a memory, an input interface, and an output interface. The input interface is configured to receive information from a communication apparatus other than the communication apparatus. The output interface is configured to output the information to the communication apparatus other than the communication apparatus. The processor is coupled to the memory. The memory is configured to store a program or instructions. When the program or the instructions is/are executed by the processor, the communication apparatus is enabled to perform the method according to any one of the second aspect or the possible implementations of the second aspect.

According to a seventh aspect, this application provides a computer-readable storage medium. The computer-readable storage medium stores a computer program or computer instructions. When the computer program or the computer instructions is/are run, the method according to any one of the first aspect and the possible implementations of the first aspect and the method according to any one of the second aspect and the possible implementations of the second aspect are performed.

According to an eighth aspect, this application provides a computer program product including program instructions. When the computer program product runs on a computer, the computer is enabled to perform the method according to any one of the first aspect and the possible implementations of the first aspect or the method according to any one of the second aspect and the possible implementations of the second aspect.

According to a ninth aspect, this application provides a communication apparatus. The communication apparatus includes a processor, and may further include a memory, configured to implement the method according to any one of the first aspect and the possible implementations of the first aspect or the method according to any one of the second aspect and the possible implementations of the second aspect. The communication apparatus may be a chip system. The chip system may include a chip, or may include a chip and another discrete device.

According to a tenth aspect, this application provides a communication system. The communication system includes at least one terminal device and at least one network device. When running in the communication system, the at least one terminal device and the at least one network device are configured to perform any method according to the first aspect and the second aspect.

## BRIEF DESCRIPTION OF DRAWINGS

To describe embodiments of this application more clearly, the following briefly describes accompanying drawings used in the embodiments. It is clear that persons of ordinary skill in the art can further obtain other drawings based on these accompanying drawings without creative efforts.

FIG. 1 is a diagram of a network architecture according to an embodiment of this application;
FIG. 2 is a diagram of a sensing scenario according to an embodiment of this application;
FIG. 3 is a diagram of a resource of a sounding reference signal for positioning according to an embodiment of this application;
FIG. 4 is a diagram of interaction in a communication method according to an embodiment of this application;
FIG. 5 is a diagram of a pattern of a first resource according to an embodiment of this application;
FIG. 6 is a diagram of another pattern of a first resource according to an embodiment of this application;
FIG. 7 is a diagram of another pattern of a first resource according to an embodiment of this application;
FIG. 8 is a diagram of another pattern of a first resource according to an embodiment of this application;
FIG. 9 is a diagram of another pattern of a first resource according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of another communication apparatus according to an embodiment of this application; and
FIG. 13 is a diagram of a structure of a terminal device according to an embodiment of this application.

## DESCRIPTION OF EMBODIMENTS

In descriptions of this application, unless otherwise specified, "/" means "or". For example, A/B may indicate A or B. In this application, "and/or" describes only an association relationship for describing associated objects and represents that three relationships may exist. For example, A and/or B may represent the following three cases: Only A exists, both A and B exist, and only B exists. In addition, "at least one" may mean one or more, and "a plurality of" may mean two or more. "At least one of ..." means listed items and any combination thereof. For example, "at least one of A, B, and C" or "at least one of A, B, or C" may indicate the following six cases: Only A exists, only B exists, only C exists, both A and B exist, both B and C exist, both A and C exist, and A, B, and C all exist. Terms such as "first" and "second" do not limit a quantity and an execution sequence, and the terms such as "first" and "second" do not indicate a definite difference.

It should be noted that, in this application, the word "example" or "for example" is used to represent giving an example, an illustration, or a description. Any embodiment or design scheme described as an "example" or "for example" in this application should not be understood as being more preferred or having more advantages than another embodiment or design scheme. Exactly, use of the word "example", "for example", or the like is intended to present a related concept in a specific manner.

In the descriptions of this application, "indication" may include a direct indication and an indirect indication, or may include an explicit indication and an implicit indication. Information indicated by a piece of information (for example, indication information described below) is referred to as to-be-indicated information. In a specific implementation process, there are a plurality of manners for indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may further be indicated based on a pre-agreed (for example, specified in a protocol) arrangement order of all information to reduce indication overheads to some extent.

In embodiments of this application, the term "wireless communication" may also be referred to as "communication" for short, and the term "communication" may also be described as "data transmission", "information transmission", or "transmission".

The following first describes technical terms that may appear in embodiments of this application. Terms used in implementations of this application are merely used to explain specific embodiments of this application, but are not intended to limit this application. In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

(1) Sensing

Sensing is to detect parameters of a target in a physical environment, such as a position of the target and a speed of the target. It may be understood that a radar detection system detects the target by transmitting an electromagnetic wave and analyzing an echo signal reflected by the target. The sensing may also be referred to as detection.

(2) Sensing signal

The sensing signal is a signal used for sensing (or detecting) a sensed target (or referred to as a target object). The sensing signal is also referred to as a detection signal, a linear frequency modulation signal, a radar signal, a radar sensing signal, a radar detection signal, an environment sensing signal, or the like. The sensing signal may be a pulse signal, or may be a signal in a wireless communication system. For example, the sensing signal may be an orthogonal frequency division multiplexing (orthogonal frequency division multiplexing, OFDM) signal obtained by modulating a specific sequence on a subcarrier. The specific sequence may be any one of the following sequences: a Zadoff-Chu sequence (ZC sequence for short), a pseudo-random sequence, a predefined sequence, and the like. The pseudo-random sequence includes any one of the following sequences: a maximal-length linear feedback shift register sequence (m sequence for short), a Gold sequence, and the like. The predefined sequence may be, for example, a random data symbol. For example, the predefined sequence may be a random data symbol modulated through quadrature phase shift keying (quadrature phase shift keying, QPSK), 16 quadrature amplitude modulation (quadrature amplitude modulation, QAM), or in another manner.

(3) Integrated sensing and communication signal

The integrated sensing and communication signal may also be referred to as a sensing-communication integrated signal, and is a signal used for both communication and sensing. "Used for communication" may be understood as that the signal carries communication data or a communication reference signal sequence that needs to be transmitted between communication devices.

(4) Integrated sensing and communication

Integrated sensing and communication aims to integrate two functions of wireless communication and sensing into a same system, and implement sensing functions such as positioning, detection, imaging, and identification of a target by using various propagation characteristics of a wireless signal, to obtain information about a surrounding physical environment, explore a communication capability, and improve user experience. For example, a terminal device may send a sensing signal, and a network device receives an echo signal of the sensing signal. The echo signal is a signal generated after the sensing signal is reflected by the target in the environment. The network device receives the echo signal, and estimates parameters such as a position and a speed of the target in the environment, to obtain related information of the target in the environment.

(5) Sounding reference signal (sounding reference signal, SRS)

The sounding reference signal is a reference signal used for uplink channel measurement. The sounding reference signal may be mainly used for uplink channel measurement. A system may perform time-frequency resource scheduling, link adaptation, massive multiple-input multiple-output (multiple-input multiple-output, MIMO), and the like based on a measurement result for the sounding reference signal. The sounding reference signal may be further used for beam management, including beam training, beam switching, and the like. In addition, for a time division duplex (time division duplex, TDD) system, channel state information of a downlink channel and the like may be further obtained by using the sounding reference signal based on reciprocity between uplink and downlink channels. In addition, the sounding reference signal may be further used for positioning, and the network device may estimate a position of a user based on the sounding reference signal sent by the user.

It should be understood that descriptions of the foregoing technical terms are merely examples. For example, with continuous development of technologies, ranges of the foregoing definitions may also change. This is not limited in embodiments of this application.

The following first describes, by using an example, a network architecture to which embodiments of this application are applicable.

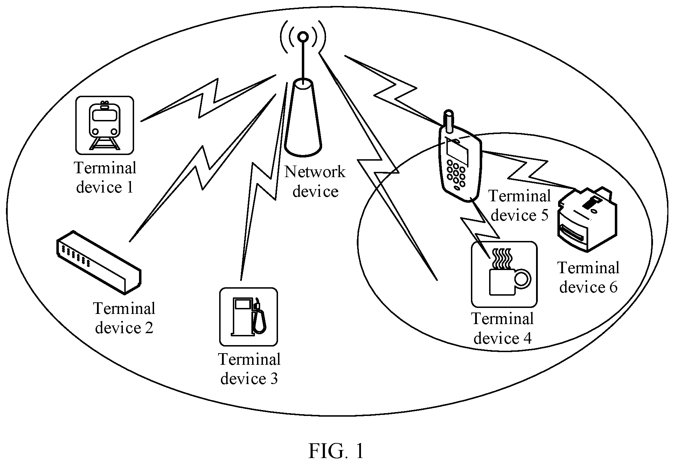

Refer to FIG. 1. FIG. 1 is a diagram of a network architecture according to an embodiment of this application.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5th generation mobile communication (the 5th generation, 5G) system, a new radio (new radio, NR) system, a machine to machine (machine to machine, M2M) system, or another future evolved communication system. This is not limited in embodiments of this application. The technical solutions provided in embodiments of this application may be further applied to another communication system, provided that an entity in the communication system can send control information and send (and/or receive) a transport block, and another entity in the communication system can receive the control information and receive (and/or send) the transport block.

As shown in FIG. 1, a network device and a terminal device 1 to a terminal device 6 constitute a communication system. In the communication system, the network device sends downlink data to one or more terminal devices in the terminal device 1 to the terminal device 6, and the terminal device 1 to the terminal device 6 may also send uplink data to the network device. In addition, aggregation transmission may be performed between terminal devices, such as the terminal device 4 to the terminal device 6 shown in the figure. In the communication system, the network device may send downlink information to the terminal device 1, the terminal device 2, the terminal device 5, and the like, the terminal device 5 may also send downlink information to the terminal device 4 and the terminal device 6, and the terminal device 4 and the terminal device 6 may also send uplink information to the network device through the terminal device 5.

The terminal device is a device having a wireless transceiver function, and may send a signal to a base station, or receive a signal from a base station. The terminal device may also be referred to as user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, intelligent transportation, and a smart city. The terminal device may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal device are not limited in embodiments of this application.

The network device in embodiments of this application is an entity configured to transmit or receive a signal, and may be a device configured to communicate with the terminal device. The network device may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access node in a Wi-Fi system, or the like. The network device may be a macro base station, a micro base station, an indoor base station, a relay node, a donor node, or a wireless controller in a CRAN scenario. Optionally, the network device may alternatively be a server, a wearable device, a vehicle, a vehicle-mounted device, or the like. For example, a network device in a vehicle-to-everything (vehicle-to-everything, V2X) technology may be a road side unit (road side unit, RSU). All or some functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or some functions of the network device.

The network device in embodiments of this application may be a device in a wireless network, for example, a radio access network (radio access network, RAN) node that connects the terminal device to the wireless network. In another possible scenario, a plurality of RAN nodes cooperate to assist a terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may alternatively have different names, but persons skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The network device in this application may alternatively be a device having a sensing function. The device may receive and process a signal reflected by a target in an environment. The target may be various tangible objects that can reflect an electromagnetic wave in an environment, for example, a ground object like a mountain, a forest, or a building, or may include a movable object like a vehicle, an uncrewed aerial vehicle, a pedestrian, or a terminal device. The target may also be referred to as a sensed target, a detected target, a sensed object, a detected object, a sensed device, or the like. This is not limited in embodiments of this application.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as a smart grid, industrial control, intelligent transportation, and a smart city. A function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal. When the terminal device communicates with the serving cell, the terminal device is further interfered by a signal from a neighboring cell.

In embodiments of this application, a time-domain symbol may be an orthogonal frequency division multiplexing (orthogonal frequency division multiplexing, OFDM) symbol or a discrete Fourier transform-spread-OFDM (discrete Fourier transform-spread-OFDM, DFT-s-OFDM) symbol. Unless otherwise specified, all symbols in embodiments of this application are time-domain symbols.

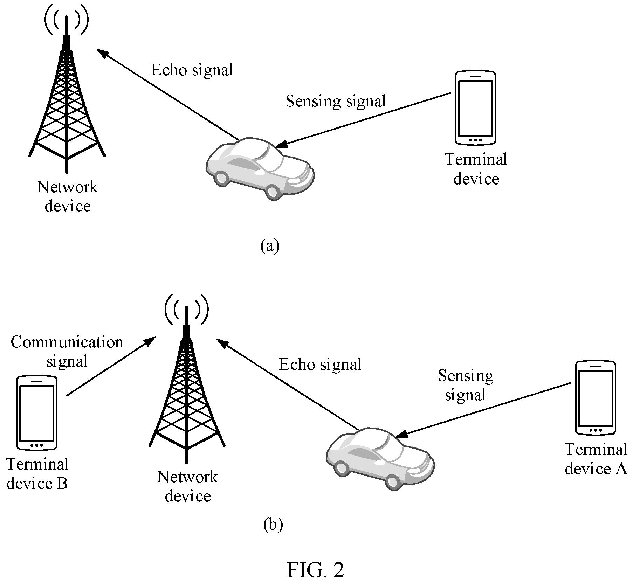

Refer to FIG. 2. FIG. 2 is a diagram of a sensing scenario according to an embodiment of this application. In a possible implementation, a terminal device may send a sensing signal, and a network device receives an echo signal of the sensing signal, to implement sensing. For example, as shown in (a) in FIG. 2, the terminal device sends the sensing signal, and the network device receives the echo signal generated by reflecting the sensing signal when the sensing signal encounters a target in an environment, to sense information such as a position and a speed of the target.

It should be noted that, when receiving an echo signal of a sensing signal sent by a terminal device, the network device may also receive, through frequency division multiplexing, spatial division multiplexing, or in another manner, a communication signal or a sensing signal sent by another terminal device. As shown in (b) in FIG. 2, the network device receives an echo signal of a sensing signal sent by a terminal device A, and receives a communication signal sent by another terminal device (for example, a terminal device B).

To facilitate understanding of embodiments of this application, technical problems to be specifically resolved in this application is further analyzed and proposed.

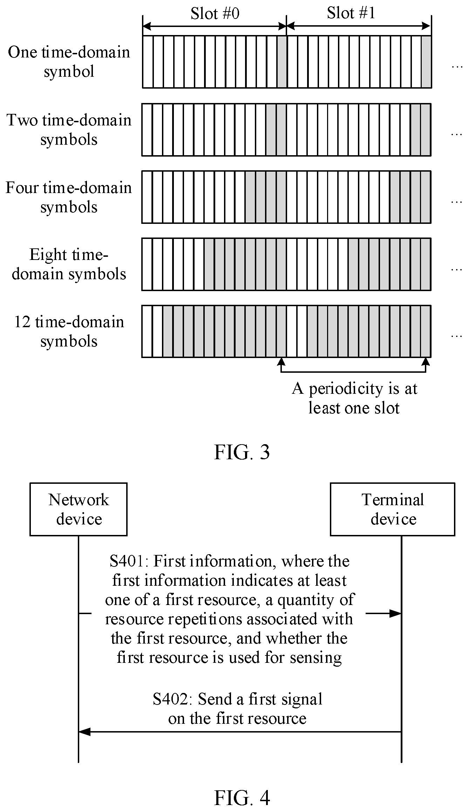

The terminal device may send a sounding reference signal, and the network device receives an echo signal of the sounding reference signal reflected by the target in the environment, to perform sensing. In a possible implementation, the sounding reference signal may be further used for positioning. Refer to FIG. 3. FIG. 3 is a diagram of a resource of a sounding reference signal for positioning according to an embodiment of this application. As shown in FIG. 3, a resource of the sounding reference signal for positioning may include one, two, four, eight, or 12 consecutive time-domain symbols in time domain, and a periodicity of the resource is at least one slot. For example, the resource includes 12 consecutive time-domain symbols. It is assumed that a signal sent by a transmitter is $e^{j\phi_m}s_m(t)$ on an $m^{th}$ time-domain symbol, where j indicates an imaginary unit, $\phi_m$ indicates a phase value (which may also be understood as an initial phase) of the $m^{th}$ time-domain symbol, $s_m(t)$ indicates a baseband signal of the $m^{th}$ time-domain symbol, and m is an integer greater than or equal to 1 and less than or equal to 12. After the signal is reflected by a target in an environment, an echo signal received by a receiver is $Ae^{j(2\pi f_d mT+\phi m)}s_m(t-\tau)$, where $\tau$ indicates a delay of the echo signal relative to the sensing signal, T indicates a signal sending periodicity (interval), $f_d$ indicates a Doppler frequency shift caused by movement of the target, and A indicates amplitude attenuation of the echo signal relative to the sent signal (affected by a target reflection capability and a path loss). During sensing processing, a range of the target may be estimated by measuring and estimating the delay of the echo signal relative to the sent signal, to implement a ranging function. The Doppler frequency shift of the target may be estimated by measuring and estimating a phase relationship between time of a plurality of echo signals, to implement a speed measurement function.

When the sounding reference signal for positioning is used for positioning and sensing, the following problems may exist.

1. A speed measurement range of sensing is determined by the signal sending periodicity, and a maximum speed measurement range is $v_m = \dfrac{\lambda_t}{4T}$, where T indicates the signal sending periodicity, and $\lambda_t$ indicates a wavelength of the sent signal. For sensing, signal energy is greatly lost after the signal is reflected by the target. Therefore, the signal needs to be sent a plurality of times for accumulation, for example, 12 consecutive time-domain symbols. When sensing is performed by using the resource of the sounding reference signal of the 12 consecutive time-domain symbols, for example, when a subcarrier spacing is 120 kHz and a carrier frequency is 28 GHz, a signal sending periodicity is a time length of one time-domain symbol, and a speed measurement range of using the resource reaches 925 km/h through calculation. However, a speed measurement range requirement in a sensing scenario usually does not exceed 200 km/h. Actually, the signal sending periodicity of the resource is too short. As a result, a waste is caused due to an excessive large quantity of time-domain symbols included in the resource, causing high overheads for sending the signal.

2. The sounding reference signal for positioning requires ranging and does not require speed measurement. To be specific, only a relative delay between the sent signal and a received signal needs to be estimated, a Doppler frequency shift does not need to be estimated (calculated by using a phase difference between a plurality of received signals), and phase values of the sounding reference signals sent on different time-domain symbols may be randomly generated, in other words, $\phi_m$ is randomly generated. As a result, a network device cannot estimate the Doppler frequency shift based on the plurality of received signals, failing to perform speed measurement.

In view of, technical problems that can be resolved in embodiments of this application include: 1. How to reduce overheads for sending a signal; and 2. how can a network device perform speed measurement based on a received signal.

The following describes specific embodiments. It should be understood that integrated sensing and communication may change with evolution of the technical solutions, and the technical solutions provided in this application are not limited to the processes described below. Further, descriptions of scenarios in embodiments of this application are merely examples, and the solutions in embodiments of this application are not limited to being applicable to only the described scenarios, and are also applicable to a scenario in which a similar problem exists.

The following describes a communication method provided in embodiments of this application. Refer to FIG. 4. FIG. 4 is a diagram of interaction in a communication method according to an embodiment of this application. A terminal device in this embodiment of this application may be the terminal device in the network architecture shown in FIG. 1. A function performed by the terminal device in this embodiment may alternatively be performed by an apparatus (for example, a chip, a chip system, or a circuit) in the terminal device. A network device in this embodiment may be the network device in the network architecture shown in FIG. 1. A function performed by the network device in this embodiment may alternatively be performed by an apparatus (for example, a chip, a chip system, or a circuit) in the network device. As shown in FIG. 4, the communication method may include the following steps.

S401: The network device sends first information to the terminal device, where the first information indicates at least one of a first resource, a quantity of resource repetitions associated with the first resource, and whether the first resource is used for sensing. Correspondingly, the terminal device receives the first information from the network device.

The first information indicates at least one of the first resource, the quantity of resource repetitions associated with the first resource, and whether the first resource is used for sensing, and the first resource may be used to transmit a first signal.

The first signal may be a sounding reference signal (sounding reference signal, SRS) or a sounding reference signal for positioning (SRS for positioning, SRS-pos), or may be a reference signal, a demodulation reference signal, or another signal, for example, a physical uplink shared channel (physical uplink shared channel, PUSCH) signal. This is not limited in embodiments of this application. The first signal may be used for sensing, or used for sensing and channel measurement, or used for sensing and channel estimation, or used for sensing and positioning.

The first resource may include inconsecutive time-domain symbols in time domain. The inconsecutive time-domain symbols may mean that an absolute value of a difference between numbers of any two adjacent time-domain symbols included in the first resource in time domain is greater than 1.

The first resource includes comb (Comb) resource elements (resource elements, REs) in frequency domain. The comb may be understood as that an absolute value of a difference between numbers of any two adjacent REs in REs included in the first resource on any time-domain symbol included in the first resource is C, where C is an integer greater than or equal to 2, and C indicates a comb size. Alternatively, the first resource includes, in frequency domain, REs that are arranged at equal intervals, and the comb size C is an interval between two adjacent REs. For example, a comb-2 means that the comb size C is 2. In other words, the first resource occupies a frequency domain resource in a comb-2 form on any time-domain symbol included in the first resource, that is, one RE is occupied in every two REs, and the occupied RE occupies a same relative position in every two REs; or one RE is occupied at an interval of one RE; or an absolute value of a difference between numbers of any two adjacent REs in REs included in the first resource on any time-domain symbol included in the first resource is 2. For another example, a comb-4 means that the comb size C is 4. In other words, the first resource occupies a frequency domain resource in a comb-4 form on any time-domain symbol included in the first resource, that is, one RE is occupied in every four REs, and the occupied RE occupies a same relative position in every four REs; or one RE is occupied at an interval of three REs; or an absolute value of a difference between numbers of any two adjacent REs in REs included in the first resource on any time-domain symbol included in the first resource is 4. The comb size (size) may also be referred to as a comb width, a comb size, or the like. For example, that the comb size is 2 may also be understood as that the first resource includes comb-2 REs in frequency domain, that the comb size is 4 may also be understood as that the first resource includes comb-4 REs in frequency domain, and that the comb size is 8 may also be understood as that the first resource includes comb-8 REs in frequency domain.

Frequency domain offsets of REs included on different time-domain symbols of the first resource are different. In a possible implementation, the first resource includes M inconsecutive time-domain symbols in time domain, and a number of an RE occupied by the first resource on a time-domain symbol m is $C \times n + o_m$, where the time-domain symbol m is an $m_{th}$ time-domain symbol in the M inconsecutive time-domain symbols, C is a comb size, n is an integer greater than or equal to 0, $o_m$ is a frequency domain offset associated with the time-domain symbol m, M is an integer greater than or equal to 2, m is an integer greater than or equal to 1 and less than or equal to M, $o_m$ is an integer greater than or equal to 0, and $o_m$ associated with the M time-domain symbols is not completely the same.

For example, M=2, the comb size C is 2, and frequency domain offsets of REs included on the first time-domain symbol and the second time-domain symbol of the first resource are 0 and 1 respectively, in other words, $o_1$=0 and $o_2$=1. To be specific, the first resource includes two time-domain symbols, where numbers of REs included on the first time-domain symbol of the first resource are $C \times n + o_1$, (for example, $2 \times n + 0$), that is, 0, 2, 4, 6, 8, 10, and ...; and numbers of resource elements included on the second time-domain symbol of the first resource are $C \times n + o_2$, (for example, $2 \times n + 1$), that is, 1, 3, 5, 7, 9, 11, and ....

The first information may indicate (include) at least one of the following: a quantity of time-domain symbols of the first resource, a comb size, an interval between time-domain symbols, position information of one time-domain symbol in the time-domain symbols included in the first resource, and frequency domain offset information of REs included on different time-domain symbols. The position information of the time-domain symbol in the time-domain symbols included in the first resource may be position information of the first time-domain symbol or position information of the last time-domain symbol. The frequency domain offset information of the REs included on the different time-domain symbols may be frequency domain start offset information of the REs included on the different time-domain symbols, for example, may be offset information of the REs included on the different time-domain symbols relative to a start RE (for example, an RE numbered 0).

In a possible implementation, there is a correspondence between the quantity of time-domain symbols of the first resource, the comb size, and the frequency domain offset information of the REs included on the different time-domain symbols. The correspondence may be presented in a form of table, or the correspondence may be predefined in a protocol, so that both the network device and the terminal device know the correspondence. Table 1 is used as an example for description in the form of table.

Table 1 Correspondence between a quantity of time-domain symbols of a first resource, a comb size, and frequency domain offset information of REs included on different time-domain symbols

|  | The quantity of time-domain symbols of the first resource is 2 | The quantity of time-domain symbols of the first resource is 4 |
|---|---|---|
| The comb size is 2 | 0, 1 | 0, 1, 0, 1 |
| The comb size is 4 | 0, 2 | 0, 2, 1, 3 |
| The comb size is 8 | --- | 0, 4, 2, 6 |

As shown in Table 1, frequency domain offsets of the REs included on the different time-domain symbols may be represented by using a plurality of numbers. For example, if the comb size C is 2, and the first resource includes two inconsecutive time-domain symbols in time domain, in other words, M=2, frequency domain offsets of REs included on the first time-domain symbol and the second time-domain symbol of the first resource are 0 and 1 respectively, in other words, $o_1=0$ and $o_2=1$; if the comb size C is 2, and the first resource includes four inconsecutive time-domain symbols in time domain, in other words, M=4, frequency domain offsets of REs included on the first time-domain symbol, the second time-domain symbol, the third time-domain symbol, and the fourth time-domain symbol of the first resource are 0, 1, 0, and 1 respectively, in other words, $o_1=0$, $o_2=1$, $o_3=0$, and $o_4=1$; if the comb size C is 4, and the first resource includes two inconsecutive time-domain symbols in time domain, frequency domain offsets of REs included on the first time-domain symbol and the second time-domain symbol of the first resource are 0 and 2 respectively, in other words, $o_1=0$ and $o_2=2$; if the comb size C is 4, and the first resource includes four inconsecutive time-domain symbols in time domain, frequency domain offsets of REs included on the first time-domain symbol, the second time-domain symbol, the third time-domain symbol, and the fourth time-domain symbol of the first resource are 0, 2, 1, and 3 respectively, in other words, $o_1=0$, $o_2=2$, $o_3=1$, and $o_4=3$; or if the comb size C is 8, and the first resource includes four inconsecutive time-domain symbols in time domain, frequency domain offsets of REs included on the first time-domain symbol, the second time-domain symbol, the third time-domain symbol, and the fourth time-domain symbol of the first resource are 0, 4, 2, and 6 respectively, in other words, $o_1=0$, $o_2=4$, $o_3=2$, and $o_4=6$.

When there is a correspondence between the quantity of time-domain symbols of the first resource, the comb size, and the frequency domain offset information of the REs included on the different time-domain symbols, the first information may indicate only the quantity of time-domain symbols of the first resource and the comb size. After receiving the first information, the terminal device may determine, based on the quantity of time-domain symbols of the first resource, the comb size, and the correspondence, the frequency domain offset information of the REs included on the different time-domain symbols of the first resource, thereby reducing signaling overheads of the first information.

For example, the following provides several pattern designs of the first resource based on different quantities of time-domain symbols and different comb sizes of the first resource.

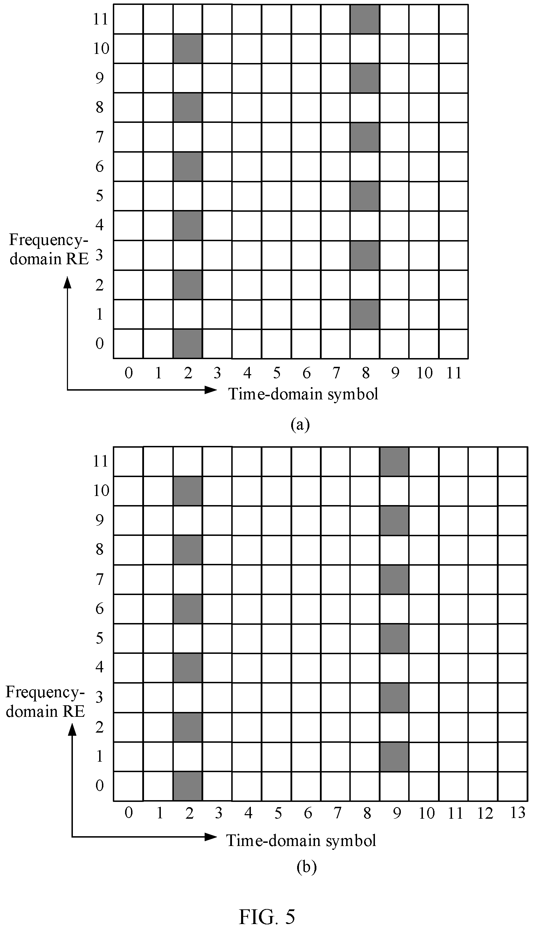

In a first possible embodiment, the comb size C of the first resource in frequency domain is 2, and the first resource includes two inconsecutive time-domain symbols in time domain, in other words, M=2. Refer to FIG. 5. FIG. 5 is a diagram of a pattern of the first resource according to this embodiment of this application.

As shown in (a) in FIG. 5, one slot includes 12 time-domain symbols, and the first resource includes two inconsecutive time-domain symbols in time domain, in other words, M=2. An interval between adjacent time-domain symbols is six symbols. In other words, an interval between the first time-domain symbol and the second time-domain symbol of the first resource is six symbols. For example, a number of the first time-domain symbol is 2. In this case, the interval between the first time-domain symbol and the second time-domain symbol is the six symbols, that is, a number of the second time-domain symbol is 2+6=8. The comb size C is 2, and offsets of REs that are included on the first time-domain symbol and the second time-domain symbol of the first resource and that are relative to an RE numbered 0 are 0 and 1 respectively, in other words, $o_1=0$ and $o_2=1$. For example, numbers of REs included on the first time-domain symbol of the first resource are 0, 2, 4, 6, 8, and 10, and numbers of REs included on the second time-domain symbol of the first resource are 1, 3, 5, 7, 9, and 11. For example, for the pattern of the first resource shown in (a) in FIG. 5, the first information may indicate information that the quantity of time-domain symbols of the first resource is 2, information that the comb size is 2, information that an interval between adjacent time-domain symbols is 6, information that a time domain position of the last symbol is three time-domain symbols away from the last time-domain symbol in the slot (the fourth-to-last time-domain symbol in the slot, namely, a time-domain symbol numbered 8), and information that frequency domain offsets of REs included on different time-domain symbols are 0 and 1 respectively.

As shown in (b) in FIG. 5, one slot includes 14 time-domain symbols, and the first resource includes two inconsecutive time-domain symbols in time domain, in other words, M=2. An interval between adjacent time-domain symbols is seven symbols. In other words, an interval between the first time-domain symbol and the second time-domain symbol of the first resource is seven time-domain symbols. For example, a number of the first time-domain symbol is 2. In this case, the interval between the first time-domain symbol and the second time-domain symbol is the seven symbols, that is, a number of the second time-domain symbol is 2+7=9. The comb size C is 2, and offsets of REs that are included on the first time-domain symbol and the second time-domain symbol of the first resource and that are relative to an RE numbered 0 are 0 and 1 respectively, in other words, $o_1=0$ and $o_2=1$. For example, numbers of REs included on the first time-domain symbol of the first resource are 0, 2, 4, 6, 8, and 10, and numbers of REs included on the second time-domain symbol of the first resource are 1, 3, 5, 7, 9, and 11. For example, for the pattern of the first resource shown in (b) in FIG. 5, the first information may indicate information that the quantity of time-domain symbols of the first resource is 2, information that the comb size is 2, information that an interval between adjacent time-domain symbols is 7, information that a time domain position of the last symbol is four time-domain symbols away from the last time-domain symbol in the slot (the fifth-to-last time-domain symbol in the slot, namely, a time-domain symbol numbered 9), and information that frequency domain offsets of REs included on different time-domain symbols are 0 and 1 respectively.

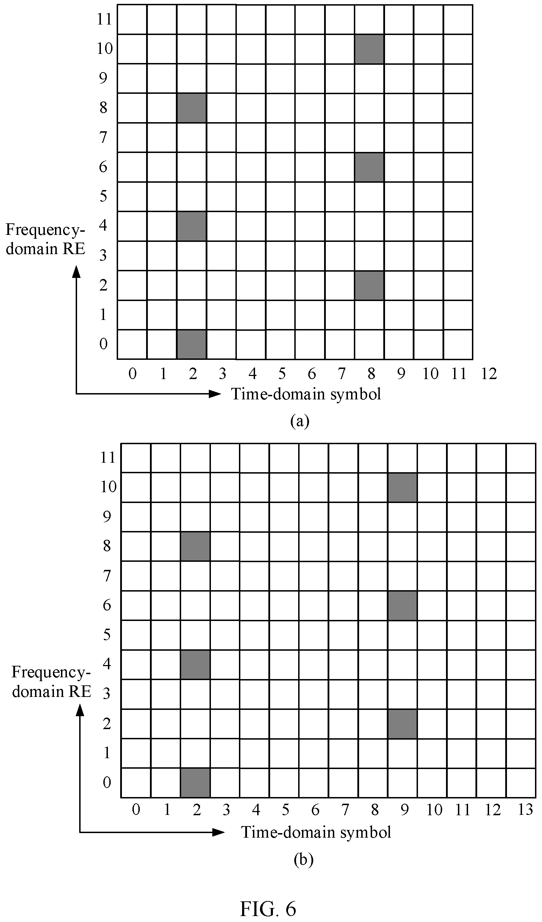

In a second possible embodiment, the comb size C of the first resource in frequency domain is 4, and the first resource includes two inconsecutive time-domain symbols in time domain, in other words, M=2. Refer to FIG. 6. FIG. 6 is a diagram of another pattern of the first resource according to this embodiment of this application.

As shown in (a) in FIG. 6, one slot includes 12 time-domain symbols, and the first resource includes two inconsecutive time-domain symbols in time domain, in other words, M=2. An interval between adjacent time-domain symbols is six symbols. In other words, an interval between the first time-domain symbol and the second time-domain symbol of the first resource is six symbols. For example, a number of the first time-domain symbol is 2. In this case, the interval between the first time-domain symbol and the second time-domain symbol is the six symbols, that is, a number of the second time-domain symbol is 2+6=8. The comb size C is 4, and offsets of REs that are included on the first time-domain symbol and the second time-domain symbol of the first resource and that are relative to an RE numbered 0 are 0 and 2 respectively, in other words, $o_1=0$ and $o_2=2$. For example, numbers of REs included on the first time-domain symbol of the first resource are 0, 4, and 8, and numbers of resource elements included on the second time-domain symbol of the first resource are 2, 6, and 10. For example, for the pattern of the first resource shown in (a) in FIG. 6, the first information may indicate information that the quantity of time-domain symbols of the first resource is 2, information that the comb size is 4, information that an interval between adjacent time-domain symbols is 6, information that a time domain position of the last symbol is three time-domain symbols away from the last time-domain symbol in the slot (the fourth-to-last time-domain symbol in the slot, namely, a time-domain symbol numbered 8), and information that frequency domain offsets of REs included on different time-domain symbols are 0 and 2 respectively.

As shown in (b) in FIG. 6, one slot includes 14 time-domain symbols, and the first resource includes two inconsecutive time-domain symbols in time domain, in other words, M=2. An interval between adjacent time-domain symbols is seven symbols. In other words, an interval between the first time-domain symbol and the second time-domain symbol of the first resource is seven time-domain symbols. For example, a number of the first time-domain symbol is 2. In this case, the interval between the first time-domain symbol and the second time-domain symbol is the seven symbols, that is, a number of the second time-domain symbol is 2+7=9. The comb size C is 4, and offsets of REs that are included on the first time-domain symbol and the second time-domain symbol of the first resource and that are relative to an RE numbered 0 are 0 and 2 respectively, in other words, $o_1=0$ and $o_2=2$. For example, numbers of REs included on the first time-domain symbol of the first resource are 0, 4, and 8, and numbers of REs included on the second time-domain symbol of the first resource are 2, 6, and 10. For example, for the pattern of the first resource shown in (b) in FIG. 6, the first information may indicate information that the quantity of time-domain symbols of the first resource is 2, information that the comb size is 4, information that an interval between adjacent time-domain symbols is 7, information that a time domain position of the last symbol is four time-domain symbols away from the last time-domain symbol in the slot (the fifth-to-last time-domain symbol in the slot, namely, a time-domain symbol numbered 9), and information that frequency domain offsets of REs included on different time-domain symbols are 0 and 2 respectively.

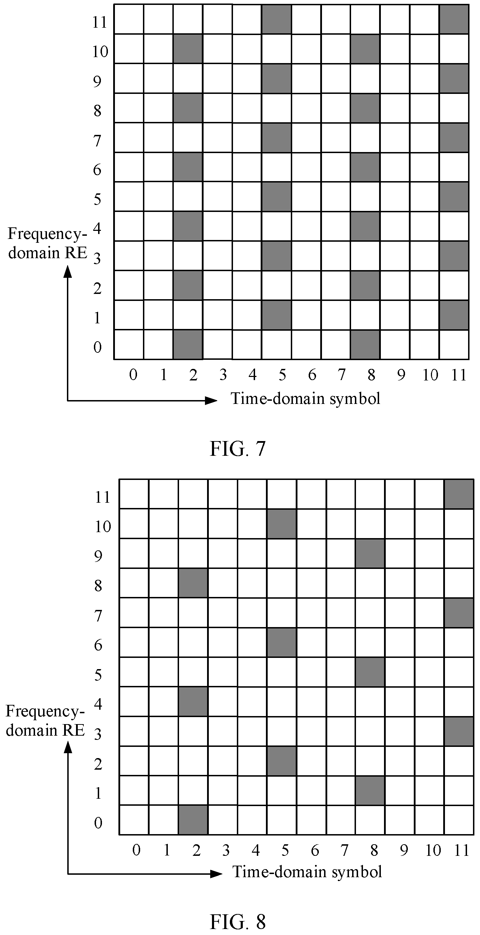

In a third possible embodiment, the comb size C of the first resource in frequency domain is 2, and the first resource includes four inconsecutive time-domain symbols in time domain, in other words, M=4. Refer to FIG. 7. FIG. 7 is a diagram of another pattern of the first resource according to this embodiment of this application. As shown in FIG. 7, one slot includes 12 time-domain symbols, and an interval between adjacent time-domain symbols is three symbols. In other words, intervals between the first time-domain symbol and the second time-domain symbol, between the second time-domain symbol and the third time-domain symbol, and between the third time-domain symbol and the fourth time-domain symbol of the first resource are three symbols, which may be understood as that an interval between two adjacent time-domain symbols in the four inconsecutive time-domain symbols is three time-domain symbols. For example, a number of the first time-domain symbol is 2. In this case, the interval between the first time-domain symbol and the second time-domain symbol is the three symbols, that is, a number of the second time-domain symbol is 2+3=5; the interval between the second time-domain symbol and the third time-domain symbol is the three symbols, that is, a number of the third time-domain symbol is 5+3=8; and the interval between the third time-domain symbol and the fourth time-domain symbol is the three symbols, that is, a number of the fourth time-domain symbol is 8+3=11. The comb size C is 2, and offsets of REs that are included on the first time-domain symbol, the second time-domain symbol, the third time-domain symbol, and the fourth time-domain symbol of the first resource that are relative to an RE numbered 0 are 0, 1, 0, and 1 respectively, in other

words, $o_1=0$, $o_2=1$, $o_3=0$, and $o_4=1$. For example, numbers of REs included on the first time-domain symbol of the first resource are 0, 2, 4, 6, 8, and 10, numbers of REs included on the second time-domain symbol of the first resource are 1, 3, 5, 7, 9, and 11, numbers of REs included on the third time-domain symbol of the first resource are 0, 2, 4, 6, 8, and 10, and numbers of REs included on the fourth time-domain symbol of the first resource are 1, 3, 5, 7, 9, and 11. For example, for the pattern of the first resource shown in FIG. 7, the first information may indicate information that the quantity of time-domain symbols of the first resource is 4, information that the comb size is 2, information that an interval between adjacent time-domain symbols is 3, information that a time domain position of the last symbol is zero time-domain symbols away from the last time-domain symbol in the slot (the first-to-last time-domain symbol in the slot, namely, a time-domain symbol numbered 11), and information that frequency domain offsets of REs included on different time-domain symbols are 0, 1, 0, and 1 respectively.

In a fourth possible embodiment, the comb size C of the first resource in frequency domain is 4, and the first resource includes four inconsecutive time-domain symbols in time domain, in other words, M=4. Refer to FIG. 8. FIG. 8 is a diagram of another pattern of the first resource according to this embodiment of this application. As shown in FIG. 8, one slot includes 12 time-domain symbols, and an interval between adjacent time-domain symbols is three symbols. In other words, intervals between the first time-domain symbol and the second time-domain symbol, between the second time-domain symbol and the third time-domain symbol, and between the third time-domain symbol and the fourth time-domain symbol of the first resource are three symbols, which may be understood as that an interval between two adjacent time-domain symbols in the four inconsecutive time-domain symbols is three time-domain symbols. For example, a number of the first time-domain symbol is 2. In this case, the interval between the first time-domain symbol and the second time-domain symbol is the three symbols, that is, a number of the second time-domain symbol is 2+3=5; the interval between the second time-domain symbol and the third time-domain symbol is the three symbols, that is, a number of the third time-domain symbol is 5+3=8; and the interval between the third time-domain symbol and the fourth time-domain symbol is the three symbols, that is, a number of the fourth time-domain symbol is 8+3=11. The comb size C is 4, and offsets of REs that are included on the first time-domain symbol, the second time-domain symbol, the third time-domain symbol, and the fourth time-domain symbol of the first resource that are relative to an RE numbered 0 are 0, 2, 1, and 3 respectively, in other words, $o_1=0$, $o_2=2$, $o_3=1$, and $o_4=3$. For example, numbers of REs included on the first time-domain symbol of the first resource are 0, 4, and 8, numbers of REs included on the second time-domain symbol of the first resource are 2, 6, and 10, numbers of REs included on the third time-domain symbol of the first resource are 1, 5, and 9, and numbers of REs included on the fourth time-domain symbol of the first resource are 3, 7, and 11. For example, for the pattern of the first resource shown in FIG. 8, the first information may indicate information that the quantity of time-domain symbols of the first resource is 4, information that the comb size is 4, information that an interval between adjacent time-domain symbols is 3, information that a time domain position of the last symbol is zero time-domain symbols away from the last time-domain symbol in the slot (the first-to-last time-domain symbol in the slot, namely, a time-domain symbol numbered 11), and information that frequency domain offsets of REs included on different time-domain symbols are 0, 2, 1, and 3 respectively.

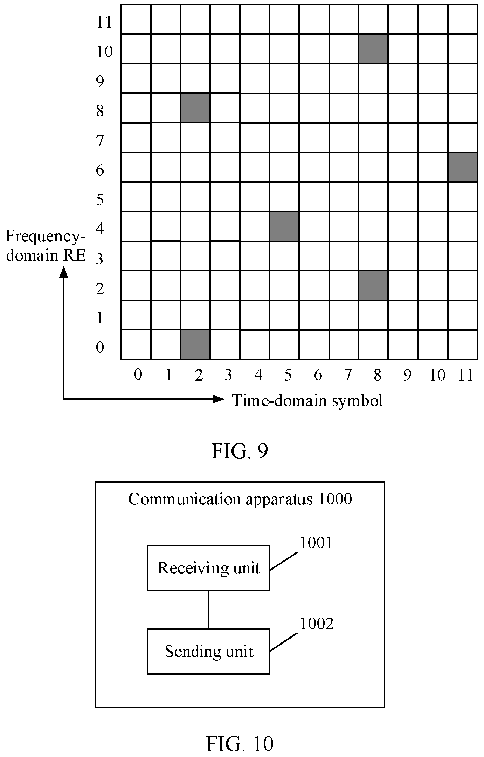

In a fifth possible embodiment, the comb size C of the first resource in frequency domain is 8, and the first resource includes four inconsecutive time-domain symbols in time domain, in other words, M=4. Refer to FIG. 9. FIG. 9 is a diagram of another pattern of the first resource according to this embodiment of this application. As shown in FIG. 9, one slot includes 12 time-domain symbols, and an interval between adjacent time-domain symbols is three symbols. In other words, intervals between the first time-domain symbol and the second time-domain symbol, between the second time-domain symbol and the third time-domain symbol, and between the third time-domain symbol and the fourth time-domain symbol of the first resource are three symbols, which may be understood as that an interval between two adjacent time-domain symbols in the four inconsecutive time-domain symbols is three time-domain symbols. For example, a number of the first time-domain symbol is 2. In this case, the interval between the first time-domain symbol and the second time-domain symbol is the three symbols, that is, a number of the second time-domain symbol is 2+3=5; the interval between the second time-domain symbol and the third time-domain symbol is the three symbols, that is, a number of the third time-domain symbol is 5+3=8; and the interval between the third time-domain symbol and the fourth time-domain symbol is the three symbols, that is, a number of the fourth time-domain symbol is 8+3=11. The comb size C is 8, and offsets of REs that are included on the first time-domain symbol, the second time-domain symbol, the third time-domain symbol, and the fourth time-domain symbol of the first resource that are relative to an RE numbered 0 are 0, 4, 2, and 6 respectively, in other words, $o_1=0$, $o_2=4$, $o_3=2$, and $o_4=6$. For example, numbers of REs included on the first time-domain symbol of the first resource are 0 and 8, a number of an RE included on the second time-domain symbol of the first resource is 4, numbers of REs included on the third time-domain symbol of the first resource are 2 and 10, and a number of an RE included on the fourth time-domain symbol of the first resource is 6. For example, for the pattern of the first resource shown in FIG. 9, the first information may indicate information that the quantity of time-domain symbols of the first resource is 4, information that the comb size is 8, information that an interval between adjacent time-domain symbols is 3, information that a time domain position of the last symbol is zero time-domain symbols away from the last time-domain symbol in the slot (the first-to-last time-domain symbol in the slot, namely, a time-domain symbol numbered 11), and information that frequency domain offsets of REs included on different time-domain symbols are 0, 4, 2, and 6 respectively.

It can be learned from the foregoing several embodiments that, in comparison with a solution in which a large quantity of consecutive time-domain symbol resources (for example, 12 consecutive time-domain symbol resources) are arranged in time domain, in this solution, because the first resource includes inconsecutive time-domain symbols in time domain, that is, a small quantity of time-domain symbol resources are arranged at intervals in time domain, overheads for sending the first signal can be reduced.

The first information may indicate whether the first signal transmitted on the first resource is used for sensing. For example, whether the first signal is used for sensing may be indicated by one bit, where 0 indicates that the first signal is not used for sensing, and 1 indicates that the first signal is used for sensing. The network device sends, to the terminal device, the information indicating whether the first signal is used for sensing, so that the terminal device can determine whether the first signal sent on the first resource is used for sensing. In a possible implementation, if the first information indicates that the first signal transmitted on the first resource is used for sensing, a small quantity of time-domain symbol resources are arranged at intervals in time domain, so that overheads for sending the first signal used for sensing can be reduced. Optionally, the first information may further indicate that the first signal is used for sensing and channel measurement, or used for sensing and channel estimation, or used for sensing and positioning, or the like, to notify the terminal device of a function of the first signal.

In a possible implementation, the first information indicates that the first signal transmitted on the first resource is used for sensing, and that the terminal device maintains phase continuity while sending the first signal may be understood as that the terminal device maintains phase continuity in a time period in which the first resource is located; or may be understood as that an absolute value of a difference between phase values of signals sent by the terminal device in different time units in a time period in which the first resource is located is less than a specific threshold, where the phase value may also be understood as an initial phase; or may be understood as that a difference between phase values of a slot p and a slot p-1 of a first device in a first time period is less than a first value, or a difference between phase values of a slot p and a slot 0 in a first time period is less than a second value, where p is an integer greater than or equal to 1. It may be understood that the first value and the second value may be a predefined value, or may be a value notified by the network device via signaling. The first value and the second value may be the same or different. Specific values of the first value and the second value are not limited in embodiments of this application. Because phase values of the sent first signals are the same, a speed measurement failure caused by a random phase of a signal sent on a radio frequency link can be avoided, so that speed measurement in sensing can be implemented.

The first information may indicate the quantity of resource repetitions associated with the first resource. For example, if the first information may indicate that the quantity of resource repetitions associated with the first resource is 2, the terminal device may send the first signal on two adjacent uplink slots by using the first resource and a same spatial filter. A value of the quantity of resource repetitions belongs to a first set. In a possible implementation, the first set includes an integer greater than or equal to 12, or the first set includes an integer greater than or equal to 6, or the first set includes an integer greater than or equal to 3. For example, the first set includes 1, 2, 3, 4, 6, and 12. For another example, the first set includes at least two of 1, 2, 3, 4, 6, and 12.

The quantity of resource repetitions may be related to a quantity of time-domain symbols of the first resource. For example, if the quantity of time-domain symbols of the first resource is 1, the first set may include the integer greater than or equal to 12; or if the quantity of time-domain symbols of the first resource is 2, the first set may include the integer greater than or equal to 6; or if the quantity of time-domain symbols of the first resource is 4, the first set may include the integer greater than or equal to 3. The quantity of resource repetitions associated with the first resource is indicated, and the first signal may be repeatedly sent on the first resource, so that the network device can combine the repeatedly sent first signals, to increase a signal-to-noise ratio of the received first signal, thereby improving sensing coverage performance when the first signal is used for sensing. In addition, the quantity of resource repetitions included in the first set is a factor of 12. With reference to a maximum quantity of resource repetitions and the pattern of the resource designed in this embodiment of this application, a quantity of first signals actually sent in this embodiment may be greater than or equal to a quantity of first signals sent on 12 existing consecutive time-domain symbols, thereby ensuring that coverage performance of the pattern of the resource designed in this embodiment of this application is not lower than coverage performance of sending the first signal on the 12 consecutive time-domain symbols.

Optionally, the first information may further indicate a periodicity for sending the first signal. For example, X (X is an integer greater than or equal to 1) slots may be used as a periodicity. The first signal is repeatedly sent Y times (Y is an integer greater than or equal to 1) by using a same spatial filter in each periodicity. For example, 10 slots may be used as a periodicity. The first signal is repeatedly sent once in each periodicity. For example, the first signal may be sent once in the first slot in the first periodicity (for example, the first slot to the tenth slot); the first signal is sent once in an eleventh slot in the second periodicity (the eleventh slot to the twentieth slot); and the rest can be deduced by analogy. For example, 10 consecutive slots may be used as a periodicity. The first signal is repeatedly sent three times in each periodicity by using the same spatial filter. For example, the first signal may be sent in the first slot to the third slot (there are three slots in total) in the first periodicity (for example, the first slot to the tenth slot); the first signal is sent by using the same spatial filter in the eleventh slot to the thirteenth slot (there are three slots in total) in the second periodicity (the eleventh slot to the twentieth slot); and the rest can be deduced by analogy.

Optionally, the following provides an example in which the network device indicates the first resource by using the first information. For example, the first information includes information indicating at least one resource set, and any resource set includes at least one first resource. The following uses an example in which the first signal is an SRS signal for description.

It is assumed that the first information includes information indicating a first resource set, and the first resource set includes an SRS signal resource A and an SRS signal resource B. It may be understood that the SRS signal resource A and the SRS signal resource B are two different first resources. For example, if a periodicity associated with the first resource set is five slots, it indicates that a periodicity of each of the SRS signal resource A and the SRS signal resource B included in the first resource set is five slots. The indication information of the SRS signal resource A includes: A quantity of symbols is 2, a comb size is 2, a time domain position of the last symbol is three time-domain symbols away from the last time-domain symbol in the slots (the time domain position of the last symbol in the resource is the fourth-to-last time-domain symbol in the slots), and a quantity of resource repetitions is 2. In this case, frequency domain offsets between the two symbols in the SRS signal resource are zero REs and one RE respectively based on the quantity of symbols being 2, the comb size being 2, and the correspondence shown in Table 1; the SRS signal resource is shown in (a) in FIG. 5 based on the indication information of the SRS signal resource A; and the information indicates, based on the quantity of resource repetitions being 2, that the terminal device needs to send the SRS signal in two adjacent uplink slots by using the SRS signal resource, for example, send the SRS signal in a slot 0 and a slot 1 by using the SRS signal resource. The indication information of the SRS signal resource B includes: A quantity of symbols is 2, a comb size is 4, a time domain position of the last symbol is three time-domain symbols away from the last time-domain symbol in the slots (the time domain position of the last symbol in the resource is the fourth-to-last time-domain symbol in the slots), and a quantity of resource repetitions is 2. In this case, frequency domain offsets between two symbols in the SRS signal resource are 0 REs and 2 REs respectively based on the quantity of symbols being 2, the comb size being 4, and the correspondence shown in Table 1; the SRS signal resource is shown in (a) in FIG. 6 based on the indication information of the SRS signal resource B; and the information indicates, based on the quantity of resource repetitions being 2, that the terminal device needs to send the SRS signal in two adjacent uplink slots by using the SRS signal resource, for example, send the SRS signal in a slot 2 and a slot 3 by using the SRS signal resource. Based on the case in which the periodicity of the first resource set is the five slots, the SRS signal may be sent by using the SRS resource A and the SRS resource B in every five slots used as one periodicity. For example, in the first periodicity (a time period corresponding to a slot 0 to a slot 4, five slots in total), the terminal device sends the SRS signal in the slot 0 and the slot 1 by using the SRS resource A, and sends the SRS signal in the slot 2 and the slot 3 by using the SRS resource B; in the second periodicity (a time period corresponding to a slot 5 to a slot 9, five slots in total), the terminal device sends the SRS signal in the slot 5 and the slot 6 by using the SRS resource A, and sends the SRS signal in the slot 7 and the slot 8 by using the SRS resource B; and the rest can be deduced by analogy. In this way, the SRS signal is continuously sent periodically. The SRS signal sent by the terminal device may be used for sensing, and the SRS signal sent by the terminal device may be further used for another function, for example, a communication function. This is not limited in embodiments of this application.

S402: The terminal device sends the first signal to the network device on the first resource. Correspondingly, the network device receives the first signal from the terminal device on the first resource.

The terminal device receives the first information from the network device, and may determine, based on the first information, at least one of the following: the quantity of time-domain symbols of the first resource, the comb size, the interval between the time-domain symbols, the position information of one time-domain symbol in the time-domain symbols included in the first resource, and the frequency domain offset information of the REs included on the different time-domain symbols. Optionally, whether the first signal transmitted on the first resource is used for sensing may be further determined, the quantity of resource repetitions associated with the first resource may be further determined, or the like. Optionally, the periodicity for sending the first signal may be further determined.

After determining information such as the first resource, the periodicity for sending the first signal, the quantity of resource repetitions, and the like, the terminal device may send the first signal to the network device on the first resource based on the information. Optionally, before sending the first signal to the network device on the first resource, the terminal device may further receive, from the network device, downlink control information (downlink control information, DCI) used to trigger sending of the first signal, and send the first signal to the network device on the first resource in response to the DCI.

Further, the network device receives the first signal from the terminal device on the first resource, and may perform sensing, or sensing and channel measurement, or sensing and channel estimation, or sensing and positioning, or the like based on the first signal. For example, the first signal arrives at the network device after being reflected by a target in an environment. The network device performs sensing processing on the received first signal, to sense the target in the environment, for example, sense a position, a speed, and the like of the target in the environment.

It may be understood that the term "determine" may also be referred to as "generate", the terms "send" and "receive" may also be referred to as "transmission", and the term "send" may also be referred to as "output". Names of terms that can implement a same function are not limited in embodiments of this application.

In this embodiment, in comparison with a solution in which a large quantity of consecutive time-domain symbol resources (for example, 12 consecutive time-domain symbol resources) are arranged in time domain, in this solution, the first information indicates at least one of the first resource, the quantity of resource repetitions associated with the first resource, and whether the first resource is used for sensing, because the first resource includes inconsecutive time-domain symbols in time domain, that is, a small quantity of time-domain symbol resources are arranged at intervals in time domain, overheads for sending the first signal can be reduced.

The foregoing describes the method embodiments provided in embodiments of this application. The following describes apparatus embodiments in embodiments of this application.

Refer to FIG. 10. FIG. 10 is a diagram of a structure of a communication apparatus according to an embodiment of this application. The apparatus may be a terminal device, or may be an apparatus (for example, a chip, a chip system, or a circuit) in the terminal device. As shown in FIG. 10, the communication apparatus 1000 includes at least a receiving unit 1001 and a sending unit 1002.

The receiving unit 1001 is configured to receive first information, where the first information indicates at least one of a first resource, a quantity of resource repetitions associated with the first resource, and whether the first resource is used for sensing, the first resource includes inconsecutive time-domain symbols in time domain, the first resource includes comb resource elements in frequency domain, frequency domain offsets of resource elements included on different time-domain symbols of the first resource are different, and the first resource is used to transmit a first signal.

The sending unit 1002 is further configured to send the first signal on the first resource.

In an implementation, the first resource includes two time-domain symbols, and an interval between adjacent time-domain symbols is six symbols or seven symbols; and

the first resource includes comb-2 resource elements in frequency domain, and offsets of the resource elements that are included on the two time-domain symbols of the first resource and that are relative to a resource element numbered 0 are 0 and 1 respectively; or
the first resource includes comb-4 resource elements in frequency domain, and offsets of the resource elements that are included on the two time-domain symbols of the first resource and that are relative to a resource element numbered 0 are 0 and 2 respectively.

In an implementation, the first resource includes four time-domain symbols, and an interval between adjacent time-domain symbols is three symbols; and

the first resource includes comb-2 resource elements in frequency domain, and offsets of the resource elements that are included on the four time-domain symbols of the first resource and that are relative to a resource element numbered 0 are 0, 1, 0, and 1 respectively; or
the first resource includes comb-4 resource elements in frequency domain, and offsets of the resource elements that are included on the four time-domain symbols of the first resource and that are relative to a resource element numbered 0 are 0, 2, 1, and 3 respectively; or
the first resource includes comb-8 resource elements in frequency domain, and offsets of the resource elements that are included on the four time-domain symbols of the first resource and that are relative to a resource element numbered 0 are 0, 4, 2, and 6 respectively.

In an implementation, a value of the quantity of resource repetitions associated with the first resource belongs to a first set, and the first set includes an integer greater than or equal to 12.

In an implementation, the first set includes 1, 2, 3, 4, 6, and 12.

In an implementation, the first information indicates that the first signal is used for sensing, and phase continuity is maintained while sending the first signal.

In an implementation, the first information indicates at least one of the following:
a quantity of time-domain symbols of the first resource, a comb size, an interval between time-domain symbols, position information of one time-domain symbol in the time-domain symbols included in the first resource, and frequency domain offset information of resource elements included on different time-domain symbols.

In an implementation, there is a correspondence between the quantity of time-domain symbols of the first resource, the comb size, and the frequency domain offset information of the resource elements included on the different time-domain symbols.

In an implementation, the first signal is a sounding reference signal or a sounding reference signal for positioning.

In an implementation, the first signal is used for sensing, or used for sensing and channel measurement, or used for sensing and channel estimation, or used for sensing and positioning.

For more detailed descriptions of the receiving unit 1001 and the sending unit 1002, refer directly to related descriptions of the terminal device in the method embodiments shown in FIG. 4 to FIG. 9. Details are not described herein again.

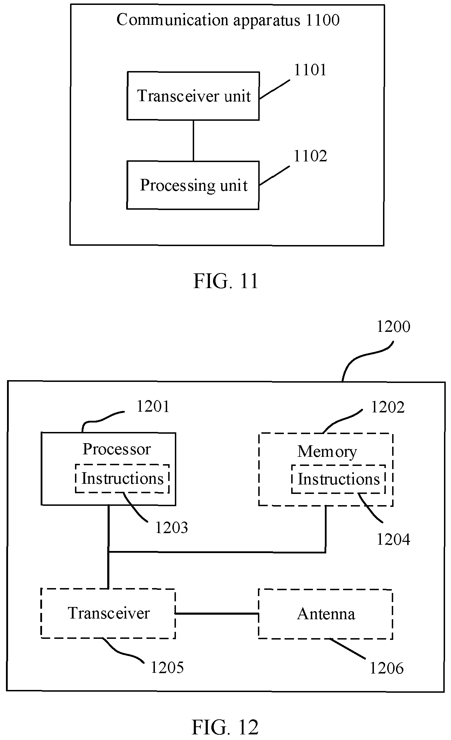

Refer to FIG. 11. FIG. 11 is a diagram of a structure of another communication apparatus according to an embodiment of this application. The communication apparatus may be a network device, or may be an apparatus (for example, a chip, a chip system, or a circuit) in a network device. As shown in FIG. 11, the communication apparatus 1100 includes at least a transceiver unit 1101 and a processing unit 1102.

The transceiver unit 1101 is configured to send first information, where the first information indicates at least one of a first resource, a quantity of resource repetitions associated with the first resource, and whether the first resource is used for sensing, the first resource includes inconsecutive time-domain symbols in time domain, the first resource includes comb resource elements in frequency domain, frequency domain offsets of resource elements included on different time-domain symbols of the first resource are different, and the first resource is used to transmit a first signal.

The transceiver unit 1101 is further configured to receive the first signal on the first resource.

In an implementation, the first resource includes two time-domain symbols, and an interval between adjacent time-domain symbols is six symbols or seven symbols; and

the first resource includes comb-2 resource elements in frequency domain, and offsets of the resource elements that are included on the two time-domain symbols of the first resource and that are relative to a resource element numbered 0 are 0 and 1 respectively; or
the first resource includes comb-4 resource elements in frequency domain, and offsets of the resource elements that are included on the two time-domain symbols of the first resource and that are relative to a resource element numbered 0 are 0 and 2 respectively.

In an implementation, the first resource includes four time-domain symbols, and an interval between adjacent time-domain symbols is three symbols; and

the first resource includes comb-2 resource elements in frequency domain, and offsets of the resource elements that are included on the four time-domain symbols of the first resource and that are relative to a resource element numbered 0 are 0, 1, 0, and 1 respectively; or
the first resource includes comb-4 resource elements in frequency domain, and offsets of the resource elements that are included on the four time-domain symbols of the first resource and that are relative to a resource element numbered 0 are 0, 2, 1, and 3 respectively; or
the first resource includes comb-8 resource elements in frequency domain, and offsets of the resource elements that are included on the four time-domain symbols of the first resource and that are relative to a resource element numbered 0 are 0, 4, 2, and 6 respectively.

In an implementation, a value of the quantity of resource repetitions associated with the first resource belongs to a first set, and the first set includes an integer greater than or equal to 12.

In an implementation, the first set includes 1, 2, 3, 4, 6, and 12.

In an implementation, the first information indicates that the first signal is used for sensing, and the first signal is sent while phase continuity is maintained.

In an implementation, the first information indicates at least one of the following:
a quantity of time-domain symbols of the first resource, a comb size, an interval between time-domain symbols, position information of one time-domain symbol in the time-domain symbols included in the first resource, and frequency domain offset information of resource elements included on different time-domain symbols.

In an implementation, there is a correspondence between the quantity of time-domain symbols of the first resource, the comb size, and the frequency domain offset information of the resource elements included on the different time-domain symbols.

In an implementation, the first signal is a sounding reference signal or a sounding reference signal for positioning.

In an implementation, the first signal is used for sensing, or used for sensing and channel measurement, or used for sensing and channel estimation, or used for sensing and positioning.

In an implementation, the apparatus 1100 may further include:
the processing unit 1102, configured to perform sensing, or sensing and channel measurement, or sensing and channel estimation, or sensing and positioning based on the first signal.

For more detailed descriptions of the transceiver unit 1101 and the processing unit 1102, refer directly to related descriptions of the network device in the method embodiments shown in FIG. 4 to FIG. 9. Details are not described herein again.

Refer to FIG. 12. FIG. 12 is a diagram of a structure of another communication apparatus according to an embodiment of this application. As shown in FIG. 12, the apparatus 1200 may include one or more processors 1201. The processor 1201 may also be referred to as a processing unit, and may implement a specific control function. The processor 1201 may be a general-purpose processor, a dedicated processor, or the like. For example, the processor 1201 may be a baseband processor or a central processing unit. The baseband processor may be configured to process a communication protocol and communication data. The central processing unit may be configured to: control the communication apparatus (for example, a base station, a base station chip, a terminal, a terminal chip, a DU, or a CU), execute a software program, and process data of the software program.

In an optional design, the processor 1201 may also store instructions 1203 and/or data, and the instructions 1203 and/or the data may be run by the processor, so that the apparatus 1200 performs the methods described in the foregoing method embodiments.

In another optional design, the processor 1201 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to: read and write code/data. Alternatively, the transceiver circuit, the interface, or the interface circuit may be configured to transmit or transfer a signal.

In another possible design, the apparatus 1200 may include a circuit. The circuit may implement the sending, receiving, or communication function in the foregoing method embodiments.

Optionally, the apparatus 1200 may include one or more memories 1202. The memory 1202 may store instructions 1204 and/or data. The instructions 1204 and/or the data may be run on the processor, so that the apparatus 1200 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or the processor.

Optionally, the apparatus 1200 may further include a transceiver 1205 and/or an antenna 1206. The processor 1201 may be referred to as a processing unit, and controls the apparatus 1200. The transceiver 1205 may be referred to as a transceiver unit, a transceiver machine, a transceiver circuit, a transceiver apparatus, a transceiver module, or the like, and is configured to implement a sending/receiving function.

Optionally, the apparatus 1200 in this embodiment of this application may be configured to perform the methods described in FIG. 4 to FIG. 9 in embodiments of this application.

In an implementation, the communication apparatus 1200 may be a terminal device, or may be an apparatus (for example, a chip, a chip system, or a circuit) in the terminal device. When computer program instructions stored in the memory 1202 are executed, the transceiver 1205 is configured to perform operations performed by the receiving unit 1001 and the sending unit 1002 in the foregoing embodiments, and the transceiver 1205 is further configured to send information to a communication apparatus other than the communication apparatus. The terminal device or the apparatus in the terminal device may be further configured to perform various methods performed by the terminal device in the method embodiments in FIG. 4 to FIG. 9. Details are not described again.

In an implementation, the communication apparatus 1200 may be a network device, or may be an apparatus (for example, a chip, a chip system, or a circuit) in the network device. When computer program instructions stored in the memory 1202 are executed, the processor 1201 is configured to perform operations performed by the processing unit 1102 in the foregoing embodiments, the transceiver 1205 is configured to perform operations performed by the transceiver unit 1101 in the foregoing embodiments, and the transceiver 1205 is further configured to receive information from a communication apparatus other than the communication apparatus. The network device or the apparatus in the network device may be further configured to perform various methods performed by the network device in the method embodiments in FIG. 4 to FIG. 9. Details are not described again.

The processor and the transceiver described in this application may be implemented on an integrated circuit (integrated circuit, IC), an analog IC, a radio frequency integrated circuit (radio frequency integrated chip, RFIC), a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, such as a complementary metal oxide semiconductor (complementary metal oxide semiconductor, CMOS), an N-channel metal oxide semiconductor (nMetal-oxide-semiconductor, NMOS), a P-channel metal oxide semiconductor (positive-channel metal oxide semiconductor, PMOS), a bipolar junction transistor (Bipolar Junction Transistor, BJT), a bipolar CMOS (Bi CMOS), silicon germanium (SiGe), and gallium arsenide (GaAs).

The apparatus described in the foregoing embodiment may be a first communication device or a second communication device. However, a range of the apparatus described in this application is not limited thereto, and a structure of the apparatus may not be limited to FIG. 12. The apparatus may be an independent device, or may be a part of a larger device. For example, the apparatus may be:

(1) an independent integrated circuit IC, a chip, or a chip system or subsystem;

(2) a set of one or more ICs, where optionally, the IC set may also include a storage component configured to store data and/or instructions;

(3) an ASIC, for example, a modem (mobile station modem, MSM);

(4) a module that can be embedded in another device;

(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like;

(6) others; or the like.

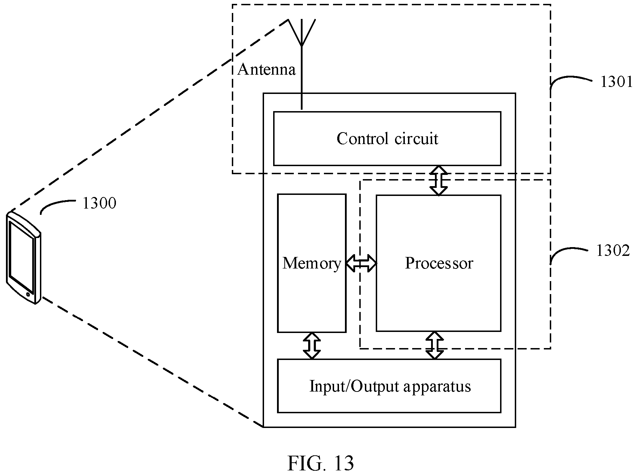

Refer to FIG. 13. FIG. 13 is a diagram of a structure of a terminal device according to an embodiment of this application. For ease of description, FIG. 13 shows only main components of the terminal device. As shown in FIG. 13, the terminal device 1300 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to: receive and send a radio frequency signal in a form of electromagnetic wave. The input/output apparatus, for example, a touchscreen, a display, or a keyboard, is mainly configured to: receive data input by a user and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in a form of electromagnetic wave through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 13 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 13 integrates functions of the baseband processor and the central processing unit. Persons skilled in the art may understand that the baseband processor and the central processing unit may alternatively be independent processors, and are interconnected by using a technology, for example, through a bus. Persons skilled in the art may understand that the terminal may include a plurality of baseband processors to adapt to different network standards, and the terminal may include a plurality of central processing units to enhance a processing capability of the terminal. All components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of software program, and the processor executes the software program to implement a baseband processing function.

In an example, the antenna and the control circuit that have a receiving/sending function may be considered as a transceiver unit 1301 of the terminal device 1300, and the processor having a processing function may be considered as a processing unit 1302 of the terminal device 1300. As shown in FIG. 13, the terminal device 1300 includes the transceiver unit 1301 and the processing unit 1302. The transceiver unit may also be referred to as a transceiver, a transceiver machine, a transceiver apparatus, or the like. Optionally, a component that is in the transceiver unit 1301 and that is configured to implement a receiving function may be considered as a receiving unit, and a component that is in the transceiver unit 1301 and that is configured to implement a sending function may be considered as a sending unit. In other words, the transceiver unit 1301 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

In an implementation, the transceiver unit 1301 is configured to perform operations performed by the receiving unit 1001 and the sending unit 1002 in the foregoing embodiments. The terminal device 1300 may be further configured to perform various methods performed by the terminal device in the method embodiments in FIG. 4 to FIG. 9. Details are not described again.

An embodiment of this application further provides a computer-readable storage medium. The computer-readable storage medium stores a computer program. When the program is executed by a processor, a procedure related to the terminal device in the methods provided in the foregoing method embodiments can be implemented.

An embodiment of this application further provides a computer-readable storage medium. The computer-readable storage medium stores a computer program. When the program is executed by a processor, a procedure related to the network device in the methods provided in the foregoing method embodiments can be implemented.

An embodiment of this application further provides a computer program product. When the computer program product runs on a computer or a processor, the computer or the processor is enabled to perform one or more steps in any one of the foregoing methods. When the foregoing modules in the device are implemented in a form of software functional unit and sold or used as an independent product, the modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 4 to FIG. 9. The chip system may include a chip, or may include a chip and another discrete device.

An embodiment of this application further discloses a communication system. The system includes a terminal device and a network device. For specific descriptions, refer to the methods shown in FIG. 4 to FIG. 9.

It may be understood that the memory mentioned in embodiments of this application may be a volatile memory or a nonvolatile memory, or may include a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). The memory is any other medium that can be used to carry or store expected program code in a form of instruction or data structure and that can be accessed by a computer, but is not limited thereto. The memory in embodiments of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (storage module) is integrated into the processor.

It should be noted that the memory described in this specification aims to include but is not limited to these memories and any memory of another proper type.

It should be understood that sequence numbers of the foregoing processes do not mean execution sequences in embodiments of this application. The execution sequences of the processes shall be determined based on functions and internal logic of the processes, and shall not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it shall not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a ROM, a RAM, a magnetic disk, or an optical disc.

A sequence of the steps in the methods in embodiments of this application may be adjusted, combined, or deleted based on an actual requirement.

The modules/units in the apparatuses in embodiments of this application may be combined, divided, or deleted based on an actual requirement.

In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

**Claims**

1. A communication method, comprising:

   receiving first information, wherein the first information indicates at least one of a first resource, a quantity of resource repetitions associated with the first resource, and whether the first resource is used for sensing, the first resource comprises inconsecutive time-domain symbols in time domain, the first resource comprises comb resource elements in frequency domain, frequency domain offsets of resource elements comprised on different time-domain symbols of the first resource are different, and the first resource is used to transmit a first signal; and
   sending the first signal on the first resource.

2. The method according to claim 1, wherein the first resource comprises two time-domain symbols, and an interval between adjacent time-domain symbols is six symbols or seven symbols; and

   the first resource comprises comb-2 resource elements in frequency domain, and offsets of the resource elements that are comprised on the two time-domain symbols of the first resource and that are relative to a resource element numbered 0 are 0 and 1 respectively; or
   the first resource comprises comb-4 resource elements in frequency domain, and offsets of the resource elements that are comprised on the two time-domain symbols of the first resource and that are relative to a resource element numbered 0 are 0 and 2 respectively.

3. The method according to claim 1, wherein the first resource comprises four time-domain symbols, and an interval between adjacent time-domain symbols is three symbols; and

   the first resource comprises comb-2 resource elements in frequency domain, and offsets of the resource elements that are comprised on the four time-domain symbols of the first resource and that are relative to a resource element numbered 0 are 0, 1, 0, and 1 respectively; or

the first resource comprises comb-4 resource elements in frequency domain, and offsets of the resource elements that are comprised on the four time-domain symbols of the first resource and that are relative to a resource element numbered 0 are 0, 2, 1, and 3 respectively; or

the first resource comprises comb-8 resource elements in frequency domain, and offsets of the resource elements that are comprised on the four time-domain symbols of the first resource and that are relative to a resource element numbered 0 are 0, 4, 2, and 6 respectively.

4. The method according to any one of claims 1 to 3, wherein a value of the quantity of resource repetitions associated with the first resource belongs to a first set, and the first set comprises an integer greater than or equal to 12.

5. The method according to claim 4, wherein the first set comprises 1, 2, 3, 4, 6, and 12.

6. The method according to any one of claims 1 to 5, wherein the first information indicates that the first signal is used for sensing, and phase continuity is maintained while sending the first signal.

7. The method according to any one of the claims 1 to 6, wherein the first information indicates at least one of the following:

a quantity of time-domain symbols of the first resource, a comb size, an interval between time-domain symbols, position information of one time-domain symbol in the time-domain symbols comprised in the first resource, and frequency domain offset information of resource elements comprised on different time-domain symbols.

8. The method according to claim 7, wherein there is a correspondence between the quantity of time-domain symbols of the first resource, the comb size, and the frequency domain offset information of the resource elements comprised on the different time-domain symbols.

9. The method according to any one of claims 1 to 8, wherein the first signal is a sounding reference signal or a sounding reference signal for positioning.

10. The method according to any one of claims 1 to 9, wherein the first signal is used for sensing, or used for sensing and channel measurement, or used for sensing and channel estimation, or used for sensing and positioning.

11. A communication method, comprising:

sending first information, wherein the first information indicates at least one of a first resource, a quantity of resource repetitions associated with the first resource, and whether the first resource is used for sensing, the first resource comprises inconsecutive time-domain symbols in time domain, the first resource comprises comb resource elements in frequency domain, frequency domain offsets of resource elements comprised on different time-domain symbols of the first resource are different, and the first resource is used to transmit a first signal; and

receiving the first signal on the first resource.

12. The method according to claim 11, wherein the first resource comprises two time-domain symbols, and an interval between adjacent time-domain symbols is six symbols or seven symbols; and

the first resource comprises comb-2 resource elements in frequency domain, and offsets of the resource elements that are comprised on the two time-domain symbols of the first resource and that are relative to a resource element numbered 0 are 0 and 1 respectively; or

the first resource comprises comb-4 resource elements in frequency domain, and offsets of the resource elements that are comprised on the two time-domain symbols of the first resource and that are relative to a resource element numbered 0 are 0 and 2 respectively.

13. The method according to claim 11, wherein the first resource comprises four time-domain symbols, and an interval between adjacent time-domain symbols is three symbols; and

the first resource comprises comb-2 resource elements in frequency domain, and offsets of the resource elements that are comprised on the four time-domain symbols of the first resource and that are relative to a resource element numbered 0 are 0, 1, 0, and 1 respectively; or

the first resource comprises comb-4 resource elements in frequency domain, and offsets of the resource elements that are comprised on the four time-domain symbols of the first resource and that are relative to a resource element numbered 0 are 0, 2, 1, and 3 respectively; or
the first resource comprises comb-8 resource elements in frequency domain, and offsets of the resource elements that are comprised on the four time-domain symbols of the first resource and that are relative to a resource element numbered 0 are 0, 4, 2, and 6 respectively.

14. The method according to any one of claims 11 to 13, wherein a value of the quantity of resource repetitions associated with the first resource belongs to a first set, and the first set comprises an integer greater than or equal to 12.

15. The method according to claim 14, wherein the first set comprises 1, 2, 3, 4, 6, and 12.

16. The method according to any one of claims 11 to 15, wherein the first information indicates that the first signal is used for sensing, and the first signal is sent while phase continuity is maintained.

17. The method according to any one of the claims 11 to 16, wherein the first information indicates at least one of the following:
a quantity of time-domain symbols of the first resource, a comb size, an interval between time-domain symbols, position information of one time-domain symbol in the time-domain symbols comprised in the first resource, and frequency domain offset information of resource elements comprised on different time-domain symbols.

18. The method according to claim 17, wherein there is a correspondence between the quantity of time-domain symbols of the first resource, the comb size, and the frequency domain offset information of the resource elements comprised on the different time-domain symbols.

19. The method according to any one of claims 11 to 18, wherein the first signal is a sounding reference signal or a sounding reference signal for positioning.

20. The method according to any one of claims 11 to 19, wherein the first signal is used for sensing, or used for sensing and channel measurement, or used for sensing and channel estimation, or used for sensing and positioning.

21. The method according to any one of claims 11 to 20, wherein the method further comprises:
performing sensing, or sensing and channel measurement, or sensing and channel estimation, or sensing and positioning based on the first signal.

22. A communication apparatus, comprising:

a receiving unit, configured to receive first information, wherein the first information indicates at least one of a first resource, a quantity of resource repetitions associated with the first resource, and whether the first resource is used for sensing, the first resource comprises inconsecutive time-domain symbols in time domain, the first resource comprises comb resource elements in frequency domain, frequency domain offsets of resource elements comprised on different time-domain symbols of the first resource are different, and the first resource is used to transmit a first signal; and
a sending unit, configured to send the first signal on the first resource.

23. The apparatus according to claim 22, wherein the first resource comprises two time-domain symbols, and an interval between adjacent time-domain symbols is six symbols or seven symbols; and

the first resource comprises comb-2 resource elements in frequency domain, and offsets of the resource elements that are comprised on the two time-domain symbols of the first resource and that are relative to a resource element numbered 0 are 0 and 1 respectively; or
the first resource comprises comb-4 resource elements in frequency domain, and offsets of the resource elements that are comprised on the two time-domain symbols of the first resource and that are relative to a resource element numbered 0 are 0 and 2 respectively.

24. The apparatus according to claim 22, wherein the first resource comprises four time-domain symbols, and an interval between adjacent time-domain symbols is three symbols; and

the first resource comprises comb-2 resource elements in frequency domain, and offsets of the resource elements that are comprised on the four time-domain symbols of the first resource and that are relative to a resource element numbered 0 are 0, 1, 0, and 1 respectively; or

the first resource comprises comb-4 resource elements in frequency domain, and offsets of the resource elements that are comprised on the four time-domain symbols of the first resource and that are relative to a resource element numbered 0 are 0, 2, 1, and 3 respectively; or

the first resource comprises comb-8 resource elements in frequency domain, and offsets of the resource elements that are comprised on the four time-domain symbols of the first resource and that are relative to a resource element numbered 0 are 0, 4, 2, and 6 respectively.

25. The apparatus according to any one of claims 22 to 24, wherein a value of the quantity of resource repetitions associated with the first resource belongs to a first set, and the first set comprises an integer greater than or equal to 12.

26. The apparatus according to claim 25, wherein the first set comprises 1, 2, 3, 4, 6, and 12.

27. The apparatus according to any one of claims 22 to 26, wherein the first information indicates that the first signal is used for sensing, and phase continuity is maintained while sending the first signal.

28. The apparatus according to any one of the claims 22 to 27, wherein the first information indicates at least one of the following:

a quantity of time-domain symbols of the first resource, a comb size, an interval between time-domain symbols, position information of one time-domain symbol in the time-domain symbols comprised in the first resource, and frequency domain offset information of resource elements comprised on different time-domain symbols.

29. The apparatus according to claim 28, wherein there is a correspondence between the quantity of time-domain symbols of the first resource, the comb size, and the frequency domain offset information of the resource elements comprised on the different time-domain symbols.

30. The apparatus according to any one of claims 22 to 29, wherein the first signal is a sounding reference signal or a sounding reference signal for positioning.

31. The apparatus according to any one of claims 22 to 30, wherein the first signal is used for sensing, or used for sensing and channel measurement, or used for sensing and channel estimation, or used for sensing and positioning.

32. A communication apparatus, comprising:

a transceiver unit, configured to send first information, wherein the first information indicates at least one of a first resource, a quantity of resource repetitions associated with the first resource, and whether the first resource is used for sensing, the first resource comprises inconsecutive time-domain symbols in time domain, the first resource comprises comb resource elements in frequency domain, frequency domain offsets of resource elements comprised on different time-domain symbols of the first resource are different, and the first resource is used to transmit a first signal; and

the transceiver unit is further configured to receive the first signal on the first resource.

33. The apparatus according to claim 32, wherein the first resource comprises two time-domain symbols, and an interval between adjacent time-domain symbols is six symbols or seven symbols; and

the first resource comprises comb-2 resource elements in frequency domain, and offsets of the resource elements that are comprised on the two time-domain symbols of the first resource and that are relative to a resource element numbered 0 are 0 and 1 respectively; or

the first resource comprises comb-4 resource elements in frequency domain, and offsets of the resource elements that are comprised on the two time-domain symbols of the first resource and that are relative to a resource element numbered 0 are 0 and 2 respectively.

34. The apparatus according to claim 32, wherein the first resource comprises four time-domain symbols, and an interval between adjacent time-domain symbols is three symbols; and

the first resource comprises comb-2 resource elements in frequency domain, and offsets of the resource elements that are comprised on the four time-domain symbols of the first resource and that are relative to a resource element numbered 0 are 0, 1, 0, and 1 respectively; or

the first resource comprises comb-4 resource elements in frequency domain, and offsets of the resource elements that are comprised on the four time-domain symbols of the first resource and that are relative to a resource element numbered 0 are 0, 2, 1, and 3 respectively; or

the first resource comprises comb-8 resource elements in frequency domain, and offsets of the resource elements that are comprised on the four time-domain symbols of the first resource and that are relative to a resource element numbered 0 are 0, 4, 2, and 6 respectively.

35. The apparatus according to any one of claims 32 to 34, wherein a value of the quantity of resource repetitions associated with the first resource belongs to a first set, and the first set comprises an integer greater than or equal to 12.

36. The apparatus according to claim 35, wherein the first set comprises 1, 2, 3, 4, 6, and 12.

37. The apparatus according to any one of claims 32 to 36, wherein the first information indicates that the first signal is used for sensing, and the first signal is sent while phase continuity is maintained.

38. The apparatus according to any one of the claims 32 to 37, wherein the first information indicates at least one of the following:

a quantity of time-domain symbols of the first resource, a comb size, an interval between time-domain symbols, position information of one time-domain symbol in the time-domain symbols comprised in the first resource, and frequency domain offset information of resource elements comprised on different time-domain symbols.

39. The apparatus according to claim 38, wherein there is a correspondence between the quantity of time-domain symbols of the first resource, the comb size, and the frequency domain offset information of the resource elements comprised on the different time-domain symbols.

40. The apparatus according to any one of claims 32 to 39, wherein the first signal is a sounding reference signal or a sounding reference signal for positioning.

41. The apparatus according to any one of claims 32 to 40, wherein the first signal is used for sensing, or used for sensing and channel measurement, or used for sensing and channel estimation, or used for sensing and positioning.

42. The apparatus according to any one of claims 32 to 41, wherein the apparatus further comprises:

a processing unit, configured to perform sensing, or sensing and channel measurement, or sensing and channel estimation, or sensing and positioning based on the first signal.

43. A communication apparatus, comprising a processor, wherein the processor is configured to execute a computer program or instructions; and when the computer program or the instructions are executed by the processor, the apparatus is enabled to perform the method according to any one of claims 1 to 10, or perform the method according to any one of claims 11 to 21.

44. The apparatus according to claim 43, wherein the communication apparatus further comprises the memory, and the memory stores the computer program or the instructions.

45. A computer-readable storage medium, wherein the computer-readable storage medium stores a computer program or computer instructions; and when the computer program or the computer instructions are executed by a processor, the method according to any one of claims 1 to 10 is implemented, or the method according to any one of claims 11 to 21 is implemented.

46. A computer program product comprising program instructions, wherein when the program instructions are run on a computer, the method according to any one of claims 1 to 10 is implemented, or the method according to any one of claims 11 to 21 is implemented.

47. A chip system, comprising at least one processor, a memory, and an interface circuit, wherein the memory, the interface circuit, and the at least one processor are interconnected through a line; the at least one memory stores instructions; and when the instructions are executed by the processor, the method according to any one of claims 1 to 10 is implemented, or the method according to any one of claims 11 to 21 is implemented.

**48.** A communication system, wherein the communication system comprises a terminal device and a network device, the terminal device is configured to perform the method according to any one of claims 1 to 10, and the network device is configured to perform the method according to any one of claims 11 to 21.

FIG. 1

Echo signal

Sensing signal

Terminal
device

Network
device

(a)

Communication
signal

Echo signal

Sensing
signal

Terminal
device B

Network
device

Terminal
device A

(b)

FIG. 2

Slot #0    Slot #1

One time-domain symbol

Two time-domain symbols

Four time-domain symbols

Eight time-domain symbols

12 time-domain symbols

A periodicity is at least one slot

FIG. 3

Network device

Terminal device

S401: First information, where the first information indicates at least one of a first resource, a quantity of resource repetitions associated with the first resource, and whether the first resource is used for sensing

S402: Send a first signal on the first resource

FIG. 4

Frequency-domain RE

Time-domain symbol

(a)

Frequency-domain RE

Time-domain symbol

(b)

FIG. 5

(a)

(b)

FIG. 6

FIG. 7

FIG. 8

FIG. 9

FIG. 10

Communication apparatus 1100

Transceiver unit —— 1101

Processing unit —— 1102

FIG. 11

1200

1201

Processor

Instructions

1203

1202

Memory

Instructions

1204

Transceiver

Antenna

1205

1206

FIG. 12

FIG. 13

## INTERNATIONAL SEARCH REPORT

| International application No. |
| --- |
| **PCT/CN2024/119869** |

| A. | CLASSIFICATION OF SUBJECT MATTER |
| --- | --- |

H04W 72/23(2023.01)i

According to International Patent Classification (IPC) or to both national classification and IPC

| B. | FIELDS SEARCHED |
| --- | --- |

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT; ENTXT; WPABS; VEN; CNKI; 3GPP: 探测参考信号, 资源, 重复, 感知, 时域, 非连续, 频域, 梳状, 偏移, SRS, resource, repeat, sense, time domain, non-continuous, frequency domain, comb, offset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115442892 A (VIVO COMMUNICATION TECHNOLOGY CO., LTD.) 06 December 2022 (2022-12-06) <br> claims 1-30, and description, paragraphs [0002]-[0015] | 1-48 |
| Y | CN 111294926 A (HUAWEI TECHNOLOGIES CO., LTD.) 16 June 2020 (2020-06-16) <br> claims 1 and 5 | 1-48 |
| A | CN 109802810 A (HUAWEI TECHNOLOGIES CO., LTD.) 24 May 2019 (2019-05-24) <br> entire document | 1-48 |
| A | CN 110768768 A (SHANGHAI HUAWEI TECHNOLOGIES CO., LTD.) 07 February 2020 (2020-02-07) <br> entire document | 1-48 |
| A | US 11515980 B1 (BLUEWAVE TECHNOLOGY (SHANGHAI) CO., LTD.) 29 November 2022 (2022-11-29) <br> entire document | 1-48 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 November 2024** | **15 November 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/119869**

| Patent document cited in search report | | | Publication date (day/month/year) | Patent family member(s) | | | Publication date (day/month/year) |
|---|---|---|---|---|---|---|---|
| CN | 115442892 | A | 06 December 2022 | None | | | |
| CN | 111294926 | A | 16 June 2020 | US | 2021297291 | A1 | 23 September 2021 |
| | | | | US | 11996959 | B2 | 28 May 2024 |
| | | | | WO | 2020114453 | A1 | 11 June 2020 |
| | | | | WO | 2020114453 | A9 | 08 July 2021 |
| | | | | EP | 3879901 | A1 | 15 September 2021 |
| | | | | EP | 3879901 | A4 | 15 December 2021 |
| | | | | EP | 3879901 | B1 | 12 July 2023 |
| CN | 109802810 | A | 24 May 2019 | EP | 4311176 | A2 | 24 January 2024 |
| | | | | EP | 4311176 | A3 | 17 April 2024 |
| | | | | WO | 2019096244 | A1 | 23 May 2019 |
| | | | | EP | 3713335 | A1 | 23 September 2020 |
| | | | | EP | 3713335 | A4 | 13 January 2021 |
| | | | | EP | 3713335 | B1 | 04 October 2023 |
| | | | | EP | 3713335 | B9 | 14 February 2024 |
| | | | | BR | 112020009723 | A2 | 03 November 2020 |
| | | | | US | 2022209908 | A1 | 30 June 2022 |
| | | | | US | 11824699 | B2 | 21 November 2023 |
| | | | | US | 2020280404 | A1 | 03 September 2020 |
| | | | | US | 11233609 | B2 | 25 January 2022 |
| CN | 110768768 | A | 07 February 2020 | None | | | |
| US | 11515980 | B1 | 29 November 2022 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311270988